(19) Europäisches Patentamt
European Patent Office
Office européen des brevets

(11) EP 2 860 883 B1

(12) EUROPEAN PATENT SPECIFICATION

(45) Date of publication and mention of the grant of the patent:
**14.08.2019 Bulletin 2019/33**

(21) Application number: **13804246.0**

(22) Date of filing: **12.06.2013**

(51) Int Cl.:
***H04W 52/02*** *(2009.01)* ***H04W 88/02*** *(2009.01)*
***H04W 76/28*** *(2018.01)*

(86) International application number:
**PCT/KR2013/005193**

(87) International publication number:
**WO 2013/187693 (19.12.2013 Gazette 2013/51)**

(54) **METHOD AND DEVICE FOR TRANSMITTING AND RECEIVING SMALL DATA IN MOBILE COMMUNICATION SYSTEM**

VERFAHREN UND VORRICHTUNG ZUM SENDEN UND EMPFANGEN VON DATEN IN EINEM MOBILKOMMUNIKATIONSSYSTEM

PROCÉDÉ ET DISPOSITIF D'ÉMISSION ET DE RÉCEPTION D'UNE PETITE QUANTITÉ DE DONNÉES DANS UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2012 US 201261658617 P**

(43) Date of publication of application:
**15.04.2015 Bulletin 2015/16**

(73) Proprietor: **Samsung Electronics Co., Ltd.**
**Suwon-si, Gyeonggi-do 443-742 (KR)**

(72) Inventors:
- **KIM, Soeng Hun**
  **Suwon-si**
  **Gyeonggi-do 443-470 (KR)**
- **JEONG, Kyeong In**
  **Suwon-si**
  **Gyeonggi-do 443-372 (KR)**
- **VAN LIESHOUT, Gert Jan**
  **Staines**
  **Middlesex TW18 4QE (GB)**
- **KIM, Sang Bum**
  **Suwon-si**
  **Gyeonggi-do 443-373 (KR)**

(74) Representative: **Nederlandsch Octrooibureau**
**P.O. Box 29720**
**2502 LS The Hague (NL)**

(56) References cited:
**WO-A2-2011/139088** **KR-A- 20070 092 102**
**KR-A- 20080 065 886** **KR-A- 20090 117 789**
**KR-A- 20120 052 179**

- **INTEL CORPORATION: "Support for UE Assistance Information for eDDA", 3GPP DRAFT; R2-121746, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 20 March 2012 (2012-03-20), pages 1-4, XP050606440, [retrieved on 2012-03-20]**
- **ERICSSON ET AL: "About DRX configuration and UE assistance", 3GPP DRAFT; R2-122587 ABOUT DRX CONFIGURATION AND UE ASSISTANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), pages 1/7-7/7, XP050607331, [retrieved on 2012-05-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- ZTE (EMAIL DISCUSSION RAPPORTEUR): "Report of email discussion [77bis#26] LTE/EDDA: L1 uplink control signalling", 3GPP DRAFT; R2-122251 - 77BIS#26 - EDDA - L1 UPLINK CONTROL SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), pages 1-8, XP050607211, [retrieved on 2012-05-15]
- "3rd Generation Partnership Project; Technical Specification Group Radio Access Network; LTE RAN Enhancements for Diverse Data Applications (Release 11)", 3GPP STANDARD; 3GPP TR 36.822, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.4.3, 3 June 2012 (2012-06-03), pages 1-49, XP050769456, [retrieved on 2012-06-03]

## Description

[Technical Field]

The present invention relates to a method and apparatus for handling small data in a mobile communication system.

[Background Art]

In general, mobile communication systems have been developed to provide communication services while guaranteeing user mobility. Thanks to rapid technological advancement, mobile communication systems are capable of providing not only voice communication services but also high-speed data communication services.

With recent introduction of various packet services, small-sized packets are sporadically and frequently generated. In a general mobile communication system like LTE, to transmit even a small packet, it is required to establish a signaling connection and data bearer. This requires exchange of many control messages. When many user equipments wishing to transmit and receive a small amount of data perform the connection establishment procedure, send and receive small data, and perform the connection release procedure, serious network load may be caused. Moreover, exchange of many control messages may degrade battery performance in user equipments.

The 3GPP standard contribution R2-121746 "Support for UE Assistance Information for eDDA" by Intel describes UE assistance information sent to an eNB to decide appropriate DRX configuration parameters for UE.

**[Disclosure** of Invention]

[Technical Problem]

Accordingly, an aspect of the present invention is to provide a method and apparatus that handle sporadically generated small packets in an efficient manner.

[Solution to Problem]

The invention is defined by the independent claims. Preferred embodiments are set out in the dependent claims.

In accordance with an aspect of the present invention, a method for changing operation states of a user equipment is provided. The method may include: determining a preferred operation state of the user equipment on the basis of at least one parameter; determining a current operation state on the basis of configuration information of the user equipment; and sending, when the preferred operation state is not equal to the current operation state, a state change request to a base station.

In accordance with another aspect of the present invention, a method for a base station to change operation states of a user equipment is provided. The method may include: creating, when a state change request is received from the user equipment, a control message for connection reconfiguration in response to the state change request; and sending the control message to the user equipment, wherein the state change request is sent to the base station when a preferred operation state of the user equipment is not equal to a current operation state thereof.

In accordance with another aspect of the present invention, a user equipment capable of changing operation states is provided. The user equipment may include: a transceiver unit to exchange data with a base station; and a control unit to perform a process of determining a preferred operation state on the basis of at least one parameter, determining a current operation state on the basis of configuration information, and controlling, when the preferred operation state is not equal to the current operation state, the transceiver unit to send a state change request to the base station.

In accordance with another aspect of the present invention, a base station capable of changing operation states of a user equipment is provided. The base station may include: a transceiver unit to exchange data with the user equipment; and a control unit to perform a process of creating, when a state change request is received through the transceiver unit from the user equipment, a control message for connection reconfiguration in response to the state change request, and controlling the transceiver unit to send the control message to the user equipment, wherein the state change request is sent to the base station when a preferred operation state of the user equipment is not equal to a current operation state thereof.

[Advantageous Effects of Invention]

In a feature of the present invention, the method and apparatus of the present invention handle sporadically generated small packets so as to reduce signaling overhead, preventing network overload and enhancing battery performance.

[Brief Description of Drawings]

FIG. 1 illustrates an LTE system architecture, to which the present invention is applied.
FIG. 2 illustrates a hierarchy of wireless protocols in the LTE system, to which the present invention is applied.
FIG. 3 depicts overall operation in a first embodiment related to state change.
FIG. 4 depicts UE operation in the first embodiment related to state change.
FIG. 5 depicts overall operation in a first embodiment related to stationary information.
FIG. 6 depicts overall operation in a first embodiment related to DRX cycle change.
FIG. 7 depicts UE operation in the first embodiment related to DRX cycle change.
FIG. 8 illustrates MDT.
FIG. 9 depicts MDT associated with WLAN information.
FIG. 10 depicts overall operation for determining UE uplink transmit output when a CoMP measurement set is configured.
FIG. 11 illustrates a first embodiment of UE operation for determining uplink transmit output.
FIG. 12 illustrates a second embodiment of UE operation for determining uplink transmit output.
FIG. 13 illustrates a third embodiment of UE operation for determining uplink transmit output.
FIG. 14 illustrates a user equipment.
FIG. 15 illustrates a base station.

[Mode for the Invention]

... **will be presented.** Same names of defined entities may be used for ease of description of the present invention. Specific terms or words used in the description should be construed in accordance with the spirit of the present invention without limiting the subject matter thereof, and may be applied to other systems having similar technical backgrounds without significant modification.
Hereinafter, embodiments of the present invention are described with reference to the accompanying drawings.
FIG. 1 illustrates an LTE system architecture, to which the present invention is applied.
Referring to FIG. 1, the LTE radio access network is composed of base stations (Evolved Node Bs, ENBs) 105, 110, 115 and 120, a Mobility Management Entity (MME) 125, and a Serving-Gateway (S-GW) 130. A user equipment (UE) 135 may connect to an external network through the ENBs 105 to 120 and the S-GW 130.
The ENBs 105 to 120 may be connected to the UE 135 through wireless channels. The ENBs 105 to 120 correspond to Node Bs of the UMTS system, but perform more complex functions in comparison to existing Node Bs.
In the LTE system, most user traffic including real-time services like VoIP (Voice over IP) services is served by shared channels.
Hence, it is necessary to perform scheduling on the basis of collected status information regarding buffers, available transmit powers and channels of UEs. Each of the ENBs 105 to 120 performs this scheduling function.
To achieve a data rate of 100 Mbps in a 20 MHz bandwidth, the LTE system utilizes Orthogonal Frequency Division Multiplexing (OFDM) as radio access technology.
The UE 135 employs Adaptive Modulation and Coding (AMC) to determine the modulation scheme and channel coding rate conforming to channel states.
The S-GW 130 creates and removes data bearers for external networks and the ENBs 105 to 120 under control of the MME 125. The MME 125 is connected to multiple ENBs and performs various control functions including mobility management for UEs.
FIG. 2 illustrates a hierarchy of wireless protocols in the LTE system, to which the present invention is applied.
Referring to FIG. 2, in the LTE system, a UE and an ENB each include a wireless protocol stack composed of a PDCP (Packet Data Convergence Protocol) layer 205 or 240, an RLC (Radio Link Control) layer 210 or 235, a MAC (Medium Access Control) layer 215 or 230, and a physical (PHY) layer 220 or 225.
The PDCP layer 205 or 240 performs compression and decompression of IP headers. The RLC layer 210 or 235 reconfigures PDCP PDUs (Protocol Data Unit) to a suitable size to conduct ARQ operations.
The MAC layer 215 or 230 forms connections between multiple RLC layer entities and PHY layer entities in a UE. The MAC layer 215 or 230 multiplexes RLC PDUs into MAC PDUs and forwards the MAC PDUs to the PHY layer 220 or 225. The MAC layer 215 or 230 demultiplexes MAC PDUs into RLC PDUs and forwards the RLC PDUs to the RLC layer 210 or 235.

The PHY layer 220 or 225 converts higher layer data into OFDM symbols by means of channel coding and modulation and transmits the OFDM symbols through a wireless channel. The PHY layer 220 or 225 converts OFDM symbols received through a wireless channel into higher layer data by means of demodulation and channel decoding and forwards the data to higher layers.

First Embodiment

A UE may be in the idle state or in the RRC connected state. The UE in the idle state is unable to send and receive data. The UE in the idle state may transition to the RRC connected state through a preset procedure when data transmission or reception is necessary. Such a transition to the RRC connected state causes exchange of control messages between the UE and the ENB, between the ENB and the MME, and between the MME and the S-GW.

The UE in the RRC connected state may send and receive data. Upon expiration of a given time after completion of data transmission and reception, the ENB releases the RRC connection to the UE. However, when the UE is expected to generate small data in a sporadic fashion, it may be advantageous to maintain the RRC connection rather than releasing the RRC connection in terms of signaling load.

As battery consumption is higher in the idle state than in the RRC connected state, it is preferable for the ENB to configure connected state DRX. For DRX operation, the UE monitors scheduling for a given period of each DRX cycle and turns off the transceiver circuit for the remaining period so as to minimize battery consumption. A long DRX cycle may be advantageous for battery saving but may be detrimental to handover performance of the UE. Hence, it is desirable to sustain the RRC connected state only when the UE satisfies the following conditions.

- The service or application running on the UE has a background traffic attribute generating small data in a sporadic fashion.
- The UE does not move rapidly or remains stationary.

When the above conditions are satisfied, the ENB configures the UE to minimize battery consumption while sustaining the RRC connected state. For example, the ENB can configure the UE so that Channel Quality Indication (CQI) reporting may be skipped or the cycle thereof may be lengthened, Sounding Reference Signal (SRS) transmission may be skipped or the cycle thereof may be lengthened, and the DRX cycle may be lengthened.

The length of the DRX cycle is in inverse proportion to handover performance/transmission delay and is in direct proportion to battery efficiency. When the remaining battery power is low, it may be desirable for the UE to have a long DRX cycle although handover may fail. In one embodiment of the present invention, two UE states are defined as follows.

- Battery saving first state: a state in which settings are configured so that battery power saving is considered first.
- Transmission delay first state: a state in which settings are not configured so that battery power saving is considered first.

When the current state does not match user/UE preferences, the UE sends a 1-bit indication as a state change request to the ENB. For example, the UE may send information requesting state change to the ENB when the current state is the transmission delay first state while reduction of battery consumption is desired, or when the current state is the battery saving first state while reduction of transmission delay or handover failure is desired.

Settings for battery saving may be varied according to the scheduling or operating policies of ENBs. For example, one ENB may regard a DRX cycle of 100 ms or more as a setting for battery saving. Another ENB may regard both a DRX cycle of 500 ms or more and a PUCCH (Physical Uplink Control Channel - uplink channel for CQI transmission or the like) cycle of 20 ms or more as a setting for battery saving. The UE is unable to directly identify whether the current configuration is a setting for battery saving, and the ENB may send DRX or PUCCH configuration information together with 1-bit information indicating the current state.

FIG. 3 depicts overall operation in a first embodiment related to state change.

Referring to FIG. 3, the UE 305 establishes an RRC connection with the ENB 310 at a given time. Later, at step 315, the UE 305 determines that the preferred state is the battery saving first state. The battery saving first state may be determined according to a preset criterion. For example, the UE 305 may determine that the preferred state is the battery saving first state when the remaining battery power is less than or equal to a given threshold and the service/application being (or to be) executed is not sensitive to transmission delay. On the contrary, the UE 305 may determine that the preferred state is the transmission delay first state when the remaining battery power is more than or equal to a given threshold, when the UE 305 is connected with a charger, or when the UE 305 is located at a place where battery charging is easy (e.g. the home of the user).

Thereafter, at step 320, the UE 305 receives a control message from the ENB 310. This control message may be an RRC Connection Setup message or RRC Connection Reconfiguration message for DRX, PUCCH or SRS configuration. The control message contains at least one of CQI configuration information, SR configuration information, SRS configuration information and DRX configuration information. Upon reception of the control message, the UE 305 identifies the current state. When a state indication or is contained in the control message, the current state is indicated by the state indication. For example, the state indication may be 2-bit information and may have the following meanings.

- State indication 0: transmission delay first state
- State indication 1: battery saving first state
- State indication 2: unspecified state. The current state is neither of the above two states. When a UE not having a specific preference receives a state indication set to "unspecified state", the UE does not issue a state change request. When a UE having a specific preference receives a state indication set to "unspecified state", the UE issues a state change request.

Although no state indication is contained in the control message, the UE 305 may determine that the current state is the transmission delay first state when a preset condition is met (e.g. DRX operation is not configured).

When no state indication is contained in the received control message, at step 325, the UE 305 does not issue a state change request because the current state is not determined. Alternatively, when no state indication is contained in the received control message but a preset condition is met, the UE 305 may determine whether to issue a state change request by assuming that the current state is the transmission delay first state. For example, if the preferred state is the battery saving first state, the UE 305 may issue a state change request; and if the preferred state is not the battery saving first state, the UE 305 may not issue a state change request.

Later, at step 330, the UE 305 receives an RRC control message containing a state indication from the ENB 310. The control message contains at least one of CQI configuration information, SR configuration information, SRS configuration information and DRX configuration information.

The UE 305 may determine whether to issue a state change request on the basis of comparison between the current state (state specified by ENB) and the preferred state (state desired by UE). Table 1 indicates whether to issue a state change request according to the combination of the current state specified by the ENB 310 through a state indication and the preferred state determined by the UE 305. As shown in Table 1, the UE 305 may issue a state change request for cases 2, 4, 7 and 8.

[Table 1]

| | State indication specified by ENB | Preferred state | State change request |
|---|---|---|---|
| Case 1 | transmission delay first state | transmission delay first state | no |
| Case 2 | transmission delay first state | battery saving first state | yes (indication=1) |
| Case 3 | transmission delay first state | unspecified state | no |
| Case 4 | battery saving first state | transmission delay first state | yes (indication=0) |
| Case 5 | battery saving first state | battery saving first state | no |
| Case 6 | battery saving first state | unspecified state | no |
| Case 7 | unspecified state | battery saving first state | yes (indication=0) |
| Case 8 | unspecified state | battery saving first state | yes (indication=1) |
| Case 9 | unspecified state | unspecified state | no |

As described above at step 325, the UE 305 may also issue a state change request when no state indication is contained in the received control message and the preferred state is the battery saving first state.

At step 335, the UE 305 creates an RRC control message containing a state change indication. At step 340, the UE 305 sends the created control message to the ENB 310. The control message may contain a 1-bit state change indication indicating necessity of state change or directly indicating the UE preferred state. That is, the state change indication may indicate one of "state change needed" and "state change not needed", one of the battery saving first state and the transmission delay first state, or whether the battery saving first state is needed.

Upon reception of the state change request, at step 345, the ENB 310 creates a control message indicating RRC connection reconfiguration corresponding to the requested state and sends the control message to the UE 305. The ENB 310 may notify the UE 305 of RRC connection reconfiguration corresponding to the preferred state by sending a control message containing a state indication.

FIG. 4 depicts UE operation in the first embodiment related to state change.

Referring to FIG. 4, at step 404, the UE determines the preferred or desirable state thereof. At step 410, the UE receives a given RRC control message. Thereafter, the UE determines whether to make a state change request by comparing the information contained in the received RRC control message with the preferred state. In other words, at step 415, the UE checks whether control information indicating the current state (state indication) is contained in the RRC control message. If such control information is contained, the procedure proceeds to step 425. Otherwise, the procedure proceeds to step 420. At step 420, as the current state is not identified and whether the corresponding ENB supports the feature of the present invention is not known, the UE waits for receiving a new RRC control message at the current or new cell.

At step 425, the UE checks whether the indicated state is identical to the preferred state. If the indicated state is identical to the preferred state, as there is no need to issue a state change request, the procedure proceeds to step 420 at which the UE waits for receiving a new RRC control message. If the indicated state is not identical to the preferred state, the procedure proceeds to step 430 at which the UE creates an RRC control message containing control information indicating the preferred state (or another state) and sends the created RRC control message to the ENB. Thereafter, the procedure returns to step 420. The UE may resend the above RRC control message containing the control information when the state indicated by the state indication contained in a newly received RRC control message is different from the preferred state, or when the UE state is not changed to the preferred state until a given time expires after sending the above RRC control message containing the control information.

To determine measurement or DRX configuration for a UE, it is important for the ENB to consider mobility of the UE. For example, when a UE is almost stationary, the ENB may configure a long DRX cycle for the UE; and, later, when the UE starts to move, the ENB may shorten the DRX cycle of the UE. For a UE without movement, the ENB may set a very long DRX cycle and may configure the UE not to perform measurement for mobility support.

Accordingly, as another embodiment of the present invention, a scheme is described that causes a UE to report mobility information indicating whether the UE is a stationary terminal to the ENB so that the ENB may determine configuration information for efficient DRX and measurement operation of the UE.

FIG. 5 depicts overall operation in a first embodiment related to stationary information.

Referring to FIG. 5, for RRC connection setup, at step 515, the UE 505 sends an RRC connection request message to the ENB 510. At step 520, the ENB 510 sends an RRC connection setup message to the UE 505. At step 525, the UE 505 sends an RRC connection setup complete message to the ENB 510. Here, the UE 505 inserts stationary state information in the RRC connection setup complete message. The stationary state information is information regarding the level of mobility of the UE 505 and may indicate the following cases.

- Permanently stationary: related to a UE that is fixed without movement after installation, like a metering device. Such a UE reports "permanently stationary" as state information.
- Temporarily stationary: a UE satisfying a preset condition may report "temporarily stationary" as state information. For example, the preset condition may correspond to a case where the UE has not moved a preset distance or more for a given duration, to a case where the movement speed of the UE measured by itself using the Doppler effect or the like is less than or equal to a preset threshold, to a case where the number of cells visited by the UE for a given duration is less than or equal to a preset value, or to a case where the UE has moved to the home cell.
- Non-stationary: when the level of mobility of the UE is higher than or equal to a given threshold, "non-stationary" is reported.
- Cannot be determined: when the UE cannot identify the level of mobility, "cannot be determined" is reported.

Upon reception of the control message, at step 530, the ENB 510 determines DRX and measurement configuration information for the UE 505 in consideration of traffic conditions and the stationary state of the UE 505. When the stationary state of the UE 505 indicates "permanently stationary", the ENB 510 may set a long DRX cycle and configure the UE 505 not to perform measurement on neighbor cells. When the stationary state of the UE 505 indicates "temporarily stationary", the ENB 510 may set a long DRX cycle and configure the UE 505 to perform measurement on neighbor cells in preparation for movement to another cell.

At step 535, the ENB 510 sends an RRC control message containing DRX and measurement configuration information to the UE 505. In return, at step 540, the UE 505 sends a response message to the ENB 510. The ENB 510 may send an RRC control message further containing a state indication at step 535. In this case, the UE 505 may issue a state change request in consideration of the state indication and the preferred state. That is, the RRC control message containing a state indication may cause the UE 505 to perform steps 320 to 345.

The UE 505 performs operations needed by the DRX and measurement configuration information. That is, the UE 505 performs measurement on a measurement object associated with the measurement ID at least once in each DRX cycle and manages L3 filtered measurement results.

Later, at step 545, the stationary state of the UE 505 is changed. For example, the stationary state may change from "temporary stationary" to "non-stationary" or "cannot be determined". Upon occurrence of stationary state change, at step 550, the UE 505 creates a control message containing new stationary state information and sends the same to the ENB 510. The ENB 510 may update the DRX or measurement configuration according to the new state of the UE 505 and notify the UE 505 of the updated DRX or measurement configuration.

When the UE 505 generates background traffic only, although data transmission and reception is not present for a considerable duration, it is desirable for the UE 505 to remain in the RRC connected state in terms of signaling load reduction. The ENB 510 may lengthen the DRX cycle as much as possible for the UE 505 so that the UE 505 can reduce battery consumption. The UE 505 performs measurement once in each DRX cycle and makes a decision about mobility using L3 filtered measurement results. Hence, a long DRX cycle may cause the UE 505 to delay decision making about mobility.

To address the above problem, the present invention presents the following scheme.

- The ENB configures two DRX cycles for a UE.
- A first DRX cycle is applied to minimize battery consumption when data transmission and reception is not present and the channel quality of the serving cell is acceptable. A second DRX cycle is applied to smooth data transmission and reception or to efficiently support mobility when data transmission and reception is present and the channel quality of the serving cell is not acceptable.

- When the applicability condition of the second DRX cycle is met, the ENB applies the second DRX cycle to the UE; and when the applicability condition of the second DRX cycle is not met, the ENB applies the first DRX cycle to the UE. The UE performs measurement on the serving cell and neighbor cells at least once in each DRX cycle.
- An onDuration period occurs at each DRX cycle. The UE monitors the PDCCH for a time duration specified by onDuration.
- During onDuration where the CSI/SRS transmission condition is satisfied, the UE performs CSI/SRS transmission; during onDuration where the CSI/SRS transmission condition is not satisfied, the UE does not perform CSI/SRS transmission.

Here, the applicability condition for the second DRX cycle is as follows.

- First condition: a preset criterion for scheduling occasions is satisfied, or
- Second condition: an "automatic change to short DRX cycle" indication is notified and the channel quality of the serving cell is below a preset threshold.

When the UE 505 has received a scheduling command for new data transmission and reception (uplink grant or downlink assignment) within a preset time, the preset criterion for scheduling occasions is satisfied.

The CSI/SRS transmission condition is as follows.

- Current onDuration is onDuration of the first DRX cycle, or
- Current onDuration is onDuration of the second DRX cycle and the second DRX cycle is applied according to satisfaction of the second condition in the applicability condition thereof.

Hence, the UE 505 does not perform CSI/SRS transmission during onDuration where the following condition is met.

- Current onDuration is onDuration of the second DRX cycle and the second DRX cycle is applied according to satisfaction of the second condition, without satisfaction of the first condition, in the applicability condition thereof. And, the current on-duration period is not specified as Active Time by other conditions.

To sum up, when the channel quality of the serving cell becomes below or equal to a preset threshold, the UE 505 performs measurement more frequently by applying the second DRX cycle. Here, as the ENB 510 may be unaware that the UE 505 uses the second DRX cycle, the UE 505 does not perform CSI/SRS transmission during onDuration specified by the second DRX cycle although CSI/SRS transmission resources are allocated.

Hereinafter, the first DRX cycle is referred to as the long DRX cycle, and the second DRX cycle is referred to as the short DRX cycle. The terms including onDuration, drxShortCycleTimer, Active Time are described in TS 36.321.

FIG. 6 depicts overall operation in a first embodiment related to DRX cycle change.

Referring to FIG. 6, at step 620, the first ENB (current serving ENB for UE) sends an RRC Connection Setup message to the UE. This control message contains DRX and measurement configuration information. When the first DRX cycle is set to a large value so as to reduce UE battery consumption, the ENB may command the UE to "apply the short DRX cycle when the channel quality matches a preset criterion by additionally providing the following two pieces of information to the UE.

- "Automatic change to short DRX cycle" indication: an indicator commanding the UE to use the short DRX cycle when the channel quality of the serving cell is below the criterion below.
- Criterion for "automatic change to short DRX cycle": a threshold value for RSRP or RSRQ of the serving cell. Instead, the S-measure parameter may be used. The UE starts to use the short DRX cycle when the channel quality of the serving cell becomes below the above criterion. In the following description, this criterion is referred to as TH1.

At step 625, the UE sets DRX and measurement configurations and performs DRX operation and measurement operation. The UE measures the RSRP and RSRQ of the serving cell at least once in each DRX cycle. If the channel quality of the serving cell is less than TH1 for a given time or more, the procedure proceeds to step 630. When the channel quality of the serving cell is acceptable, only scheduling occasions are considered to determine the DRX cycle to be applied. That is, the DRX cycle to be applied is determined in consideration of whether drxShortCycleTimer is running.

At step 630, the UE applies the short DRX cycle although scheduling occasions indicate application of the long DRX cycle. Specifically, the UE checks whether drxShortCycleTimer is currently running. If drxShortCycleTimer is currently running, the UE restarts drxShortCycleTimer. If drxShortCycleTimer is not running, the UE starts drxShortCycleTimer. Thereafter, before expiration of drxShortCycleTimer, the UE examines the channel state of the serving cell and determines whether to restart drxShortCycleTimer. That is, if the channel quality is below TH1, the UE restarts drxShortCycleTimer before expiration thereof.

At step 635, the UE performs measurement according to the short DRX cycle. When a given condition is satisfied (e.g. channel quality of a neighbor cell is better by an offset than that of the serving cell for a given duration), the UE creates a control message containing measurement results and sends the same to the ENB.

At step 640, the ENB determines to hand over the UE to the second ENB in consideration of the measurement results reported by the UE.

At step 645, the first ENB and the second ENB perform a handover preparation procedure, in which the first ENB sends a Handover Request message to the second ENB and the second ENB sends a Handover Reqeust ACK message to the first ENB.

At step 650, the first ENB sends a control message commanding handover to the UE. When the target cell is a picocell, it is desirable for the UE to frequently perform measurement for a given time after handover. Specifically, it is possible for the UE to exit from the picocell sometime after entering the picocell. Hence, if measurement is infrequently performed, the UE may fail to rapidly detect the exit from the picocell, causing connection failure.

To address the above problem, the ENB may command the UE to apply the short DRX cycle after handover regardless of scheduling occasions. This direction may be implemented by inserting control information like "automatic change to short DRX cycle 2" indication in the above control message. In other words, when the UE receives such indication via a control message directing handover, the UE may perform measurement on a shorter cycle for a preset duration or until a preset condition is satisfied after entering the target cell.

Here, for example, the preset condition may be satisfied when the channel quality of a new target cell becomes better than a preset threshold, which is a threshold other than TH1.

The control message directing handover may be an RRC Connection Reconfiguration message containing mobilityControlInfo (target cell information).

At step 655, the UE obtains downlink synchronization with a target cell controlled by the second ENB and initiates the random access procedure. The UE sends an random access preamble to the target cell and waits for a random access response message.

At step 660, the UE receives a random access response message from the ENB. When the random access procedure is successfully completed, at step 665, the UE applies the short DRX cycle by immediately starting drxShortCycleTimer.

FIG. 7 depicts UE operation in the first embodiment related to DRX cycle change.

At step 705, the UE receives an RRC control message containing "automatic change to short DRX cycle" indication and other configuration information from the ENB. According to the DRX configuration, in each DRX cycle, the UE may perform measurement at least once and monitor the downlink control channel during Active Time.

At step 710, the UE compares the channel quality value of the serving cell (L3-filtered $F_n$) with TH1. Here, values of measurement performed at least once in each DRX cycle are L3-filtered. $F_n$ is the updated filtered measurement result reflecting n-th measurement and is computed using a given equation involving $F_{n-1}$, filter coefficient and latest measurement value. Detailed information is provided in TS 36.331. If $F_n$ of the serving cell is greater than TH1, the procedure proceeds to step 715. If $F_n$ is not greater than TH1, the procedure proceeds to step 725.

At step 715, the UE determines whether to apply the short DRX cycle in consideration of scheduling occasions only regardless of channel states. For example, when a scheduling command indicating new transmission within a given time is received, or when the timer associated with a scheduling command indicating new transmission expires, the UE starts to apply the short DRX cycle.

At step 720, the UE performs CSI/SRS transmission during any onDuration. Here, the UE performs CSI/SRS transmission while onDurationTimer is running regardless of whether onDurationTimer is started by the long DRX cycle or by the short DRX cycle.

At step 725, the UE determines whether to apply the short DRX cycle in consideration of channel states. For example, when $F_n$ is less than TH1, the UE determines to apply the short DRX cycle although the short DRX cycle is not scheduled.

At step 730, the UE performs CSI/SRS transmission during onDuration initiated only by the long DRX cycle. Specifically, the UE performs CSI/SRS transmission while onDurationTimer is running only when onDurationTimer is started at a subframe satisfying Equation 1.

[Equation 1]

$$[(SFN \times 10) + subframe\ number]\ modulo(longDRX = Cycle) = drxStartOffset$$

For onDuration initiated by the short DRX cycle, the UE performs CSI/SRS transmission only when a preset condition is satisfied. For example, when onDuration is initiated at a subframe satisfying Equation 2, UE performs CSI/SRS transmission if a preset condition is satisfied and does not perform CSI/SRS transmission if the preset condition is not satisfied. Here, the preset condition may be satisfied, for example, when onDuration belongs to Active Time for different reasons, or when onDuration is initiated by not only the short DRX cycle but also the long DRX cycle (i.e. onDuration is started at a subframe satisfying both Equation 1 and Equation 2).

[Equation 2]

$$[(SFN \times 10) + subframe\ number]\ modulo(shortDRX\text{-}Cycle) = (drxStartOffset)\ modulo(shortDRX\text{-}Cycle)$$

Second Embodiment

In general, at the time of initial deployment of wireless networks or network optimization, the base station or base station controller is required to collect information regarding wireless network environments through drive tests. To perform a drive test in a conventional manner, a test engineer has to drive a vehicle loaded with measurement instruments and perform repeated measurements for a long time. Measurement results are analyzed and used to configure system parameters of the base station or base station controller. Such drive tests increase optimization and operational costs of wireless networks. A research has been conducted under the name Minimization of Drive Tests (MDT) to minimize drive tests and enhance the process for wireless environment analysis and manual configuration. To this end, instead of drive tests, the UE performs radio channel measurement. The UE may report channel measurement information to the ENB early on a periodic basis or on an event driven manner, or may store the channel measurement information and report the same to the ENB sometime later. In the following description, transmission of radio channel measurement information and other supplementary information by the UE to the ENB is referred to as MDT measurement information reporting. In this case, the UE may immediately report channel measurement results to the ENB when communication with the ENB is possible, or may store the channel measurement results if immediate reporting is not possible and report the stored channel measurement results to the ENB sometime later when communication with the ENB is possible. Then, the ENB may use the MDT measurement information received from the UE to optimize cell coverage.

FIG. 8 illustrates MDT.

In an existing drive test, as indicated by indicia 800, a communication engineer drives a vehicle loaded with measurement instruments across the service area while measuring signal quality. In MDT, a UE 820 takes part in measurement and the network monitoring system (NMS) 805 may activate MDT operation. Here, the NMS 805 provides necessary configuration information to the element manager (EM) 810. The EM 810 composes MDT configuration and sends the same to the ENB 815. The ENB 815 forwards the MDT configuration 825 to the UE 820 and issues an MDT command.

The UE 820 collects MDT measurement information, which may include not only signal measurement information but also location and time information. The collected information 830 is reported to the ENB 815. The ENB 815 forwards the collected information to the trace collection entity (TCE) 835, which is a server managing MDT measurement information.

To provide useful information through MDT, it is desirable to add information on a location at which MDT measurement is performed to MDT measurement information. When the UE 820 is equipped with a GPS receiver, GPS information may be used as location related information. However, the GPS receiver is useless in indoor environments. In the present invention, a scheme is presented that estimates the location of the UE using a WLAN when GPS location information is unavailable and adds the estimated location information to MDT measurement results.

FIG. 9 depicts MDT associated with WLAN information.

At step 905, the MDT server provides MDT configuration information to the ENB. At step 910, the ENB selects a UE to perform MDT operation. The ENB may select one of UEs having agreed about MDT performance in consideration of remaining battery power, GPS enablement and WLAN enablement.

At step 915, the ENB provides the selected UE with MDT measurement configuration information. The MDT measurement configuration information may include as follows.

- absoluteTimeInfo: information for determining the time related to MDT measurement, e.g., the time to perform MDT measurement.
- areaConfiguration: information for designating the area in which MDT measurement is performed.
- loggingDuration: information for designating the duration at which MDT measurement is performed.
- loggingInterval: information for designating the period for MDT measurement.
- wlanInfo: information regarding a WLAN to be measured at MDT measurement. Specifically, wlanInfo includes as follows.

    ◦ SSID (service set identification) or ESSID (extended service set identification)
    ◦ WLAN channel related information (frequency band, channel number or the like)

At step 920, the ENB issues a command for RRC connection release to the UE.

At step 925, the UE performs RRC connection release, enters the idle state, and conducts MDT measurement. More specifically, the UE performs measurement on the serving cell and neighbor cells on a cycle indicated by loggingInterval and stores measurement values. If effective location information is available through the GPS/GNSS during measurement, the UE also stores the location information. If effective speed information is available through the GPS/GNSS during measurement, the UE also stores the speed information. Here, effective information indicates information obtained within a preset duration. When effective location information is not available, the UE checks whether wlanInfo is contained in the MDT configuration information. If wlanInfo is contained, the UE operates as follows.

The UE checks whether effective WLAN location information obtained after the most recent logging occasion is present (logging indicates MDT measurement and storage of measurement related information). Here, effective WLAN location information indicates WLAN measurement information associated with SSID (or ESSID) indicated by wlanInfo among measurement information obtained within a preset duration.

The WLAN measurement information may indicate MAC addresses (or basic service set identifier (BSSID)), received signal strength information and WLAN channel information of access points (AP) whose received signal strength is above a given threshold among access points having SSID or ESSID indicated by wlanInfo.

In other words, when the UE connects to a WLAN or scans WLANs, if SSID or ESSID of a measured WLAN AP is indicated one, the UE stores the address, received signal strength and WLAN channel information of the AP for a given duration. If the stored information satisfies a preset condition, the UE stores this information so that it is associated with MDT measurement results. Otherwise, the UE discards the stored information. The preset condition is satisfied when effective GPS/GNSS location information to be associated with MDT measurement results is unavailable at a time of logging but effective WLAN measurement information is available.

At step 930, the UE transitions to the RRC connected state. More specifically, the UE performs RRC connection setup in the current serving cell. During RRC connection setup, if the PLMN for RRC connection setup is the same as the PLMN where MDT measurement results are collected, the UE notifies the ENB of presence of MDT measurement results. That is, the UE inserts logMeasAvailable in the RRC connection setup complete message.

At step 935, the ENB sends a control message indicating MDT measurement reporting to the UE. Specifically, the ENB sends a UEInformationRequest message containing logMeasReportReq to the UE.

At step 940, the UE sends a control message containing MDT measurement results to the ENB. Specifically, the UE sends a UEInformationResponse message containing logMeasReport to the ENB. logMeasReport includes the following information.

- absoluteTimeStamp: information on the reference time associated with MDT measurement. A logged MDT measurement result includes information indicating the time difference between the reference time and the time at which the associated MDT measurement is performed.

- logMeasInfoList: contains information regarding results of performed MDT measurements at each logging occasion. Such information may include signal strength values of the serving cell and neighbor cells. As information on MDT measurement results is included for each logging occasion, logMeasInfoList may include multiple pieces of information on MDT measurement results.
- WLAN measurement result: information regarding WLAN measurement results associated with a logging occasion. WLAN measurement results may be associated with MDT measurement results in a one-to-one way, and the ENB or MDT server may estimate location information of an MDT measurement result from the associated WLAN measurement result information. Specifically, a WLAN measurement result is associated with an AP of given SSID or ESSID. When the AP has been installed by an operator, the operator may be aware of the actual position of the AP and may accurately estimate the location on the basis of BSSID and signal strength of the AP.

At step 945, the ENB sends the MDT measurement results to the MDT server at an appropriate time or upon request from the MDT server.

Third Embodiment

Next, as a third embodiment of the present invention, a description is given of a method and apparatus that enable the UE to set uplink transmit output when Coordinated Multipoint Transmission and Reception (CoMP) is configured.

CoMP refers to signal transmission and reception among multiple nodes or transmission points (TP). TPs are identified by Channel State Information Reference Signal (CSI-RS) resources (refer to TS 36.211, 36.212, 36.213).

In most cases, TPs are placed in proximity to UEs. Hence, when transmit output of a UE for uplink data is set so that a nearby TP can receive the data, it is possible to significantly reduce battery power consumption. In the present invention, a method and apparatus are presented that can maintain transmit output of a UE at a suitable level according to the direction of the ENB and autonomous decision of the UE.

More specifically, the UE may use a first scheme or second scheme to set uplink transmit output. In the first scheme, uplink transmit output is determined in consideration of the pathloss of Cell Reference Signal (CRS) (refer to TS 36.211, 36.212, 36.213) of the serving cell. In the second scheme, uplink transmit output is determined in consideration of the path loss of CSI-RS of a TP satisfying a preset criterion. Here, the preset criterion may be as follows.

[Path-loss based CSI-RS resource determination criterion 1]

Uplink transmit output is determined with respect to the smallest one of path losses of CSI-RS resources belonging to the CoMP measurement set.

[Path-loss based CSI-RS resource determination criterion 2]

Uplink transmit output is determined with respect to the largest one of path losses of CSI-RS resources belonging to the CoMP measurement set.

[Path-loss based CSI-RS resource determination criterion 3]

Uplink transmit output is determined with respect to the average of path losses of CSI-RS resources belonging to the CoMP measurement set.

[Path-loss based CSI-RS resource determination criterion 4]

Uplink transmit output is determined with respect to the path loss of a CSI-RS resource explicitly indicated by the CoMP measurement set configuration process.

Here, the CoMP measurement set is a set of configured CSI-RS resources (as described above, CSI-RS resources may correspond to TPs), and is identified by a CSI-RS resource identifier.

FIG. 10 depicts overall operation for determining UE uplink transmit output when a CoMP measurement set is configured.

In an embodiment of FIG. 10, the UE has performed RRC connection setup with a serving cell, and TP#0 (1015), TP#1 (1020), TP#2 (1025) and TP#3 (1030) are deployed in the coverage area of the serving cell.

At step 1035, the ENB 1010 sends a control message for configuring the CoMP resource management set to the UE.

The CoMP resource management set is a set of CSI-RS resources on which the UE performs measurement on a periodic basis to manage the CoMP measurement set. The control message may contain measConfig or the like. The CSI-RS resources may be set as a measurement object and may be individually identified by CSI-RS resource identifiers. The CSI-RS resources are periodically measured and a control message is created to report measurement results when a preset condition is met.

Here, for example, the preset condition may be satisfied when the received signal strength measured on at least one CSI-RS resource is above or equal to a preset threshold for a given duration, or when the path loss measured on at least one CSI-RS resource is above or equal to a preset threshold for a given duration.

The above control message contains CSI-RS configuration information related to the measurement object, and the CSI-RS configuration information may include information on one or more CSI-RS resources. CSI-RS resource information may include the following lower level information.

- CSI-RS resource identifier: integer between 0 and 31 identifying a CSI-RS resource.
- Number of antenna ports: the number of antenna ports used for transmission and reception of a CSI-RS resource.
- Resource configuration information: information related to the number of CSI-RS signals. Refer to Tables 6.10.5.2-1 and 6.10.5.2-2 in TS 36.211.
- Subframe configuration information: information related to the pattern of subframes at which a CSI-RS signal is transmitted. Refer to Tables 6.10.5.3-1 in TS 36.211.
- CSI-RS resource transmit output information: information for path loss measurement. This indicates transmit output of each CSI-RS resource and is the sum of transmit outputs of antennas when multiple antennas are used (i.e. more than one antenna port).

For ease of description, it is assumed that CSI-RS #n indicates a CSI-RS resource having an identifier n.

Upon reception of a control message indicating CSI-RS resource measurement, at step 1040, the UE performs given measurements (e.g. Reference Signal Received Power (RSRP) or path loss) on the CSI-RS resource.

The UE applies L3 filtering to the measurement values and checks whether the filtered result satisfies a preset criterion. Here, for example, the preset criterion may be satisfied when the RSRP exceeds a preset threshold for a given duration, or when a CSI-RS resource is found that has a measurement value better than or worse than by an offset that of the best or worst CSI-RS resource belonging to the CoMP resource management set.

When s-Measure is set in measConfig, the UE may apply s-Measure differently according to whether the measurement object is an E-UTRA frequency or a CSI-RS resource. Specifically, to determine whether to perform measurement on a specific measurement object, when the measurement object is an E-UTRA frequency, the UE determines to perform measurement only if the channel quality of the serving cell is worse than s-Measure. When the measurement object is a CSI-RS resource, the UE determines to perform measurement even if the channel quality of the serving cell is better than s-Measure.

At step 1045, if at least one of CSI-RS resources belonging to the CoMP resource management set satisfies a preset condition, the UE generates a measurement result report and sends the same to the ENB. The control message for measurement reporting may include an identifier of a CSI-RS resource having triggered measurement result reporting and L3 filtered measurement result.

At step 1050, the ENB determines whether to configure a CoMP measurement set for the UE. If the result of measurement on at least one CSI-RS resource satisfies a preset criterion, the ENB may determine to configure a CoMP measurement set. At step 1055, the ENB creates an RRC control message containing control information for a CoMP measurement set and sends the same to the UE. The above control message may include the following information.

- Identifiers of CSI-RS resources belonging to the CoMP measurement set.
- Information regarding CSI-RS resources for which CSI reporting is to be performed.
- Information indicating whether to apply the second scheme for setting uplink transmit output.
- Information indicating the CSI-RS resource whose path loss is used when the second scheme for setting uplink transmit output is applied. For example, the following information may be included.
    - ◦ Identifier of a CSI-RS resource to be used as the path loss reference; or
    - ◦ Rule to select a CSI-RS resource to be used as the path loss reference
        - Select a CSI-RS resource having the smallest path loss (or having the highest RSRP) from the CoMP set
        - Select a CSI-RS resource having the largest path loss (or having the lowest RSRP) from the CoMP set
        - Path loss average of CSI-RS resources belonging to the CoMP set
        - The CoMP set is one of the CoMP measurement set and the CoMP resource management set.
- Additional information needed when the second scheme is used to set uplink transmit output

◦ PO_PUSCH_2: a value different from PO_PUSCH. Specifically, while PO_PUSCH is computed as the sum of two independent parameters, PO_PUSCH_2 is directly signaled as one parameter.
◦ referenceSignalPower2: downlink transmit output of the CSI-RS resource serving as the path loss reference utilized for path loss computation.

Upon reception of the above control message, the UE changes the scheme for setting uplink transmit output from the first scheme to the second scheme.
The UE starts to send results of measurement on CSI-RS resources belonging to the CoMP measurement set through designated PUCCH resources. Here, PUCCH transmit output is determined using the second scheme. L3 filtering is not applied to the above measurement results.
At step 1070, the UE determines a CSI-RS resource serving as the path loss reference according to the direction of the ENB.
At step 1075, the UE triggers a Power Headroom Report (PHR).
The PHR is a MAC layer control message containing information on available transmit output of the UE, and is triggered when a given condition is met. In the present invention, when the scheme for setting transmit output is changed from the first scheme to the second scheme or from the second scheme to the first scheme (that is, the path loss measurement object is changed from the CRS of the serving cell to the CSI-RS resource of a TP or from the CSI-RS resource of a TP to the CRS of the serving cell), the UE triggers a PHR although prohibitPHR-Timer is running. In addition, when uplink grant for new transmission is received, at step 1080, the UE creates a PHR and sends the same.
The PHR contains the difference between the maximum transmit output and needed uplink transmit output. The reason for PHR triggering in the above situation is that it is highly probable for the path loss to significantly vary owing to the change of the path loss measurement object.
Thereafter, at step 1085, the UE determines uplink transmit output using the second scheme and performs PUCCH and PUSCH transmission.
In some cases, the UE may move out of the range of the CoMP measurement set before the ENB commands the UE to change the scheme for setting uplink transmit output to the first scheme. This may cause incorrect setting of uplink transmit output, resulting in inefficient uplink data transmission. In this situation, the UE may autonomously make a fallback to the first scheme for setting uplink transmit output. The UE has to be aware of preset fallback conditions, and continuously monitors whether the fallback conditions are satisfied when the second scheme for setting uplink transmit output is applied. The fallback conditions may include as follows.

- The path loss of the serving cell becomes smaller than that of the CSI-RS resource serving as the path loss reference.
- Recently, n uplink HARQ transmissions are failed in succession (i.e. HARQ NACK is received n times in succession)
- Recently, k MAC PDU transmissions are failed out of m MAC PDU transmissions (i.e. k out of m MAC PDU transmissions failed)

When a fallback condition is met at step 1090, at step 1097, the UE changes the scheme for setting transmit output to the first scheme and creates a control message containing a fallback report. At step 1098, the UE sends the control message containing a fallback report to the ENB. The fallback report control message may contain the following information.

- Fallback reason: may indicate satisfaction of fallback condition 1 or fallback condition 2, for example.
- Results of measurement on RSRP or path loss of CSI-RS resources in the CoMP measurement set. L3 filtered measurement results are used.

Next, a description is given of the first scheme for setting uplink transmit output.
In the first scheme for determining uplink transmit output, the UE considers the following factors.

- Maximum transmit output: maximum transmit output usable by the UE per serving cell. This is determined according to physical properties of the UE and conditions of the serving cell.
- Needed transmit output: transmit output needed by the UE for uplink transmission. This may be determined by the following factors.

  ◦ Transmission format: channel coding and modulation scheme used. This is applied only to determination of PUSCH transmit output.
  ◦ PUCCH format: types and formats of PUCCH. Different values are applied according to types of control information such as HARQ feedback and CSI.
  ◦ Transmission bandwidth: the number of Physical Resource Blocks (PRB). This is applied only to determination of PUSCH transmit output.

◦ CSI-RS path loss of the CSI-RS resource serving as the path loss reference

◦ Accumulated value of Transmit Power Control (TPC) commands while the first scheme is applied. TPC commands are provided through scheduling directions (uplink grant or downlink assignment) and may direct, for example, increment by 1 dB or decrement by 1 dB. This is initialized to 0 when the first scheme is replaced by the second scheme, or when random access is conducted in the serving cell.

◦ Offset: offset 3 contained separately in the control message indicating change to the second scheme

The UE computes the needed transmit output by substituting the above factors into a given equation, and selects the smaller one of the needed transmit output and maximum transmit output as transmit output.

Next, a description is given of the second scheme for setting uplink transmit output.

In the second scheme for determining uplink transmit output, the UE considers the following factors.

- Maximum transmit output: maximum transmit output usable by the UE per serving cell. This is determined according to physical properties of the UE and conditions of the serving cell. The same as that of the first scheme.
- Needed transmit output: transmit output needed by the UE for uplink transmission. This may be determined by the following factors.

◦ Transmission format: channel coding and modulation scheme used. This is applied only to determination of PUSCH transmit output. The same as that of the first scheme.

◦ PUCCH format: types and formats of PUCCH. Different values are applied according to types of control information such as HARQ feedback and CSI. The same as that of the first scheme.

◦ Transmission bandwidth: the number of Physical Resource Blocks (PRB). This is applied only to determination of PUSCH transmit output. The same as that of the first scheme.

◦ CRS path loss of the serving cell

◦ Accumulated value of TPC commands while the second scheme is applied. TPC commands are provided through scheduling directions (uplink grant or downlink assignment) and may direct, for example, increment by 1 dB or decrement by 1 dB.

◦ Offset: sum of offset 1 provided by system information of the serving cell and offset 2 provided by a given control message

The UE computes the needed transmit output by substituting the above factors into a given equation, and selects the smaller one of the needed transmit output and maximum transmit output as transmit output.

FIG. 11 illustrates a first embodiment of UE operation for determining uplink transmit output.

In the embodiment of FIG. 11, the UE replaces the first scheme with the second scheme for determining uplink transmit output.

At step 1105, the UE receives an RRC control message while determining uplink transmit output using the first scheme. At step 1110, the UE checks whether the control message contains information indicating use of the second scheme. When control information related to the second scheme is contained in a control message, the UE determines that use of the second scheme is directed. If control information indicating use of the second scheme is not contained in the control message, the procedure proceeds to step 1115. If control information indicating use of the second scheme is contained in the control message, the procedure proceeds to step 1120.

At step 1115, the UE continues to use the first scheme for determining uplink transmit output.

At step 1120, the UE waits for completion of PUSCH transmission in progress, that is, until CURRENT_TX_NB (refer to TS 36.321) of all HARQ processes performing uplink transmission becomes a preset threshold, stores the currently accumulated value of TPC commands, and initializes the accumulated value of TPC commands to zero. The stored accumulated value of TPC commands will be used again when the first scheme is applied again. At step 1125, the UE replaces the first scheme with the second scheme for determining uplink transmit output.

FIG. 12 illustrates a second embodiment of UE operation for determining uplink transmit output.

In the embodiment of FIG. 12, the UE replaces the second scheme with the first scheme for determining uplink transmit output.

At step 1205, the UE receives an RRC control message while determining uplink transmit output using the second scheme.

At step 1210, the UE checks whether the control message contains information indicating release of the CoMP measurement set (i.e., command to release PUCCH resources for reporting results of measurement on CSI-RS resources). If a release indication is contained in the control message, the procedure proceeds to step 1220. If a release indication is not contained, the procedure proceeds to step 1215.

At step 1215, the UE continues to use the second scheme for determining uplink transmit output.

At step 1220, the UE waits for completion of PUSCH transmission in progress, that is, until CURRENT_TX_NB (refer to TS 36.321) of all HARQ processes performing uplink transmission becomes a preset threshold. If the current serving cell is the same as the previous serving cell having used the first scheme (that is, no handover during recovery of the first scheme), the UE initializes the accumulated value of TPC commands to the accumulated value of TPC commands previously used by the first scheme. At step 1225, the UE replaces the second scheme with the first scheme for determining uplink transmit output.

FIG. 13 illustrates a third embodiment of UE operation for determining uplink transmit output.

In the embodiment of FIG. 13, the UE uses the first scheme for PUCCH transmission and uses the second scheme for PUSCH transmission.

At step 1305, the UE becomes aware of necessity of uplink transmission in the near future. For example, uplink transmission may be indicated by reception of uplink grant, configuration of uplink grant, necessity of HARQ retransmission, necessity of PUCCH transmission or necessity of PUSCH transmission. At step 1310, the UE determines the scheme for determining uplink transmit output. If the first scheme for determining uplink transmit output is used, the procedure proceeds to step 1315; and if the second scheme is used, the procedure proceeds to step 1320.

At step 1315, the UE determines uplink transmit output using CRS path loss of the serving cell.

At step 1320, the UE checks whether uplink transmission is PUCCH transmission, PUSCH transmission or SRS transmission. If uplink transmission is PUCCH transmission, the procedure proceeds to step 1315; and If uplink transmission is PUSCH or SRS transmission, the procedure proceeds to step 1325.

At step 1325, the UE determines uplink transmit output using path loss of a CSI-RS resource selected by use of a given rule.

FIG. 14 illustrates a user equipment.

The user equipment may include a mux/demux unit 1415, a control message handler 1430, and various higher layer units 1420 and 1425.

The transceiver unit 1405 receives data and control signals through downlink channels of a serving cell and sends data and control signals through uplink channels. When multiple serving cells are configured, the transceiver unit 1405 may send and receive data and control signals through the multiple serving cells.

The mux/demux unit 1415 multiplexes data coming from the higher layer units 1420 and 1425 or the control message handler 1430, and demultiplexes data received by the transceiver unit 1405 and forwards the demultiplexed data to the higher layer units 1420 and 1425 or the control message handler 1430.

The control message handler 1430, as an RRC layer entity, processes a control message received from a base station and performs a corresponding operation. For example, when an RRC control message is received, the control message handler 1430 forwards information on the CoMP measurement set to the control unit 1410.

The higher layer units 1420 and 1425 may be configured on a service basis. The higher layer units 1420 and 1425 may process user data generated by service applications such as File Transfer Protocol (FTP) and Voice over Internet Protocol (VoIP) and forward the processed user data to the mux/demux unit 1415, and delivers data coming from the mux/demux unit 1415 to appropriate service applications at the higher layer.

The control unit 1410 examines scheduling commands such as uplink grants received through the transceiver unit 1405, and controls the transceiver unit 1405 and the mux/demux unit 1415 so that uplink transmissions are performed at proper timings with appropriate transmission resources. The control unit 1410 controls procedures related to state change directions, procedures related to stationary information, procedures related to DRX cycle change, procedures related to MDT, and procedures related to CoMP operation.

FIG. 15 illustrates a base station.

The base station may include a transceiver unit 1505, a control unit 1510, a mux/demux unit 1520, a control message handler 1535, various higher layer units 1525 and 1530, and a scheduler 1515.

The transceiver unit 1505 sends data and control signals through a downlink carrier and receives data and control signals through an uplink carrier. When multiple carriers are configured, the transceiver unit 1505 may send and receive data and control signals through the multiple carriers.

The mux/demux unit 1520 multiplexes data coming from the higher layer units 1525 and 1530 or the control message handler 1535, and demultiplexes data received by the transceiver unit 1505 and forwards the demultiplexed data to the higher layer units 1525 and 1530, the control message handler 1535 or the control unit 1510.

The control message handler 1535 processes a control message received from a user equipment and performs a corresponding operation, and generates a control message to be sent to a user equipment and forwards the control message to a lower layer.

The higher layer units 1525 and 1530 may be configured on a bearer basis. The higher layer units 1525 and 1530 may compose RLC PDUs using data received from the S-GW or another base station and forward the composed RLC PDUs to the mux/demux unit 1520, and may compose PDCP SDUs using RLC PDUs received from the mux/demux unit 1520 and send PDCP SDUs to the S-GW or another base station.

The scheduler 1515 allocates transmission resources to a user equipment at appropriate points in time in consideration of buffer states and channel states of the user equipment, and controls the transceiver unit 1505 to send or receive a signal to or from the user equipment. The control unit 1510 controls procedures related to state change directions, procedures related to stationary information, procedures related to DRX cycle change, procedures related to MDT, and procedures related to CoMP operation.

## Claims

1. A method for changing operation states of a user equipment, the method comprising, at the user equipment:

   transmitting (525) stationary state information indicating mobility information of the user equipment to a base station;
   receiving (330, 535) a control message comprising a state indication and DRX and measurement configuration information of the user equipment based on the stationary state information from the base station;
   determining (335) a preferred operation state of the user equipment based on at least one parameter;
   determining (335) a current operation state based on at least one of the configuration information of the user equipment and the state indication; and
   transmitting (340), when the preferred operation state is not equal to the current operation state, a state change request to a base station.

2. The method of claim 1, wherein the operation states comprise a battery saving first state, a transmission delay first state, and an unspecified state.

3. The method of claim 1, wherein the at least one parameter indicates at least one of remaining battery power and transmission delay sensitivity of a currently running application.

4. The method of claim 1, wherein the configuration information of the user equipment comprises at least one of CQI configuration information, SR configuration information, SRS configuration information, and DRX configuration information.

5. The method of claim 1, wherein the state change request contains at least one of an indication indicating necessity of state change and an indication indicating the preferred operation state.

6. A method for a base station to change operation states of a user equipment, the method comprising:

   receiving (525) stationary state information indicating mobility information of the user equipment from the user equipment;
   transmitting (330, 535), to the user equipment, a first control message comprising DRX and measurement configuration information of the user equipment determined based on the stationary state information and a state indication indicating a current operation state of the user equipment to instruct the user equipment to transmit a state change request when a preferred operation state of the user equipment is not equal to the current operation state of the user equipment;
   creating, when the state change request is received from the user equipment, a second control message for connection reconfiguration in response to the state change request; and
   transmitting (345) the second control message to the user equipment.

7. The method of claim 6, wherein the state change request contains at least one of an indication indicating necessity of state change and an indication indicating the preferred operation state of the user equipment.

8. The method of claim 6, wherein the operation states comprise a battery saving first state, a transmission delay first state, and an unspecified state.

9. A user equipment capable of changing operation states, comprising:

   a transceiver unit to exchange data with a base station; and
   a control unit configured to control the transceiver unit to transmit stationary state information indicating mobility information of the user equipment to a base station, control the transceiver unit to receive a control message comprising a state indication and DRX and measurement configuration information of the user equipment based on the stationary state information from the base station, determine a preferred operation state based on at least one parameter, determine a current operation state based on at least one of the configuration information of the user equipment and the state indication, and control the transceiver unit to transmit, when the preferred operation state is not equal to the current operation state, a state change request to the base station.

**10.** The user equipment of claim 9, wherein the operation states comprise a battery saving first state, a transmission delay first state, and an unspecified state.

**11.** The user equipment of claim 9, wherein the at least one parameter indicates at least one of remaining battery power and transmission delay sensitivity of a currently running application.

**12.** The user equipment of claim 9, wherein the configuration information comprises at least one of CQI configuration information, SR configuration information, SRS configuration information, and DRX configuration information.

**13.** The user equipment of claim 9, wherein the state change request contains at least one of an indication indicating necessity of state change and an indication indicating the preferred operation state.

**14.** A base station capable of changing operation states of a user equipment, comprising:

a transceiver unit to exchange data with the user equipment; and
a control unit configured to control the transceiver unit to receive stationary state information indicating mobility information of the user equipment from the user equipment, control the transceiver unit to transmit, to the user equipment, a first control message comprising DRX and measurement configuration information of the user equipment determined based on the stationary state information and a state indication indicating a current operation state of the user equipment to instruct the user equipment to transmit a state change request when a preferred operation state of the user equipment is not equal to the current operation state of the user equipment, create, when the state change request is received through the transceiver unit from the user equipment, a control message for connection reconfiguration in response to the state change request, and control the transceiver unit to transmit the control message to the user equipment.

**15.** The base station of claim 14, wherein the state change request contains at least one of an indication indicating necessity of state change and an indication indicating the preferred operation state of the user equipment.

**16.** The base station of claim 14, wherein the operation states comprise a battery saving first state, a transmission delay first state, and an unspecified state.

## Patentansprüche

**1.** Verfahren zum Wechseln von Betriebszuständen eines Benutzergeräts, wobei das Verfahren Folgendes umfasst, bei dem Benutzergerät:

Übertragung (525) stationärer Zustandsinformationen mit Beweglichkeitsinformationen des Benutzergeräts an eine Basisstation;
Empfang (330, 535) einer Kontrollnachricht mit einer Zustandsangabe und DRX und Messkonfigurations-Informationen des Benutzergeräts, basierend auf den stationären Zustandsinformationen von der Basisstation;
Ermittlung (335) eines bevorzugten Betriebszustands des Benutzergeräts, basierend auf mindestens einem Parameter;
Ermittlung (335) eines aktuellen Betriebszustands, basierend auf den Konfigurationsinformationen des Benutzergeräts und/oder der Zustandsangabe; und
Übertragung (340), wenn der bevorzugte Betriebszustand nicht gleich dem aktuellen Betriebszustand ist, einer Zustandsänderungsanforderung an eine Basisstation.

**2.** Verfahren nach Anspruch 1, wobei die Betriebszustände einen ersten Batteriesparzustand umfassen, einen ersten Übertragungsverzögerungszustand und einen unspezifizierten Zustand.

**3.** Verfahren nach Anspruch 1, wobei der mindestens eine Parameter die verbleibende Akkuleistung und/oder die Übertragungsverzögerungsempfindlichkeit einer derzeit laufenden Anwendung angibt.

**4.** Verfahren nach Anspruch 1, wobei die Konfigurationsinformationen des Benutzergeräts mindestens eine der folgenden umfassen: CQI-Konfigurationsinformationen, SR-Konfigurationsinformationen, SRS-Konfigurationsinformationen und DRX-Konfigurationsinformationen.

**5.** Verfahren nach Anspruch 1, wobei die Zustandsänderungsanforderung eine Angabe der Notwendigkeit der Zustandsveränderung und/oder eine Angabe des bevorzugten Betriebszustands enthält.

**6.** Verfahren für eine Basisstation, um Betriebszustände eines Benutzergeräts zu verändern, wobei das Verfahren Folgendes umfasst:

Empfang (525) stationärer Zustandsinformationen mit Beweglichkeitsinformationen des Benutzergeräts von dem Benutzergerät;
Übertragung (330, 535), an das Benutzergerät, einer ersten Kontrollnachricht mit DRX und Messkonfigurations-Informationen des Benutzergeräts, ermittelt basierend auf den stationären Zustandsinformationen und einer Zustandsangabe, die einen aktuellen Betriebszustand des Benutzergeräts anzeigt, um das Benutzergerät anzuweisen, eine Zustandsänderungsanforderung zu übertragen, wenn ein bevorzugter Betriebszustand des Benutzergeräts nicht gleich dem aktuellen Betriebszustand des Benutzergeräts ist;
Schaffung, wenn die Zustandsänderungsanforderung von dem Benutzergerät her empfangen wird, einer zweiten Kontrollnachricht zur Verbindungsneukonfiguration als Antwort auf die Zustandsveränderungsanfrage; und
Übertragung (345) der zweiten Kontrollnachricht an das Benutzergerät.

**7.** Verfahren nach Anspruch 6, wobei die Zustandsänderungsanforderung eine Angabe der Notwendigkeit der Zustandsveränderung und/oder eine Angabe des bevorzugten Betriebszustands des Benutzergeräts enthält.

**8.** Verfahren nach Anspruch 6, wobei die Betriebszustände einen ersten Batteriesparzustand, einen ersten Übertragungsverzögerungszustand und einen unspezifizierten Zustand umfassen.

**9.** Benutzergerät, das fähig ist, die Betriebszustände zu wechseln, mit:

einer Transceivereinheit, um Daten mit einer Basisstation auszutauschen; und
einer Steuereinheit, konfiguriert, um die Transceivereinheit zu steuern, um stationäre Zustandsinformationen mit Beweglichkeitsinformationen des Benutzergeräts an eine Basisstation zu übertragen, die Transceivereinheit zu steuern, um eine Kontrollnachricht zu empfangen, mit einer Zustandsangabe und DRX und Messkonfigurations-Informationen des Benutzergeräts basierend auf den stationären Zustandsinformationen von der Basisstation her, einen bevorzugten Betriebszustand zu ermitteln, basierend auf mindestens einem Parameter, einen aktuellen Betriebszustand zu ermitteln, basierend auf den Konfigurationsinformationen des Benutzergeräts und/oder der Zustandsangabe, und die Transceivereinheit zu steuern, um, wenn der bevorzugte Betriebszustand nicht gleich dem aktuellen Betriebszustand ist, eine Zustandsänderungsanforderung an die Basisstation zu übertragen.

**10.** Benutzergerät nach Anspruch 9, wobei die Betriebszustände einen ersten Batteriesparzustand, einen ersten Übertragungsverzögerungszustand und einen unspezifizierten Zustand umfassen.

**11.** Benutzergerät nach Anspruch 9, wobei der mindestens eine Parameter die verbleibende Akkuleistung und/oder die Übertragungsverzögerungsempfindlichkeit einer derzeit laufenden Anwendung angibt.

**12.** Benutzergerät nach Anspruch 9, wobei die Konfigurationsinformationen mindestens eine der Folgenden umfassen: CQI-Konfigurationsinformationen, SR-Konfigurationsinformationen, SRS-Konfigurationsinformationen und DRX-Konfigurationsinformationen umfassen.

**13.** Benutzergerät nach Anspruch 9, wobei die Zustandsänderungsanforderung eine Angabe der Notwendigkeit der Zustandsveränderung und/oder eine Angabe des bevorzugten Betriebszustands enthält.

**14.** Basisstation, die fähig ist, die Betriebszustände eines Benutzergeräts zu wechseln, mit:

einer Transceivereinheit, um Daten mit dem Benutzergerät auszutauschen; und
einer Steuereinheit, konfiguriert, um die Transceivereinheit zu steuern, um stationäre Zustandsinformationen mit Beweglichkeitsinformationen des Benutzergeräts von dem Benutzergerät zu empfangen, die Transceivereinheit zu steuern, um an das Benutzergerät eine erste Kontrollnachricht mit DRX und Messkonfigurations-Informationen des Benutzergeräts zu übertragen, ermittelt basierend auf den stationären Zustandsinformationen und einer Zustandsangabe, die einen aktuellen Betriebszustand des Benutzergeräts anzeigt, um das Benutzergerät anzuweisen, eine Zustandsänderungsanforderung zu übertragen, wenn ein bevorzugter Betriebszustand des Benutzergeräts nicht gleich dem aktuellen Betriebszustand des Benutzergeräts ist, um, wenn die Zustandsänderungsanforderung durch die Transceivereinheit von dem Benutzergerät her empfangen wird, eine Kontrollnachricht zur Verbindungsneukonfiguration als Antwort auf die Zustandsänderungsanforderung zu schaffen, und die Transceivereinheit zu steuern, um die Kontrollnachricht an das Benutzergerät zu übertragen.

**15.** Basisstation nach Anspruch 14, wobei die Zustandsänderungsanforderung eine Angabe der Notwendigkeit der Zustandsveränderung und/oder eine Angabe des bevorzugten Betriebszustands des Benutzergeräts enthält.

**16.** Basisstation nach Anspruch 14, wobei die Betriebszustände einen ersten Batteriesparzustand, einen ersten Übertragungsverzögerungszustand und einen unspezifizierten Zustand umfassen.

## Revendications

**1.** Procédé pour modifier des états de fonctionnement d’un équipement d’utilisateur, le procédé comprenant, dans l’équipement d’utilisateur :

transmettre (525) de l’information d’état fixe indiquant de l’information de mobilité de l’équipement d’utilisateur à une station de base ;
recevoir (330, 535) un message de contrôle comprenant une indication d’état et de l’information de configuration de DRX et de mesure de l’équipement d’utilisateur en se basant sur l’information d’état fixe depuis la station de base ;
déterminer (335) un état de fonctionnement préféré de l’équipement d’utilisateur en se basant sur au moins un paramètre ;
déterminer (335) un état de fonctionnement actuel en se basant sur au moins une parmi l’information de configuration de l’équipement d’utilisateur et l’indication d’état ; et
transmettre (340), lorsque l’état de fonctionnement préféré n’est pas égal à l’état de fonctionnement actuel, une demande de modification d’état à une station de base.

**2.** Procédé selon la revendication 1, où les états de fonctionnement comprennent un premier état d’économie de batterie, un premier état de délai de transmission et un état non spécifié.

**3.** Procédé selon la revendication 1, où l’au moins un paramètre indique au moins l’une parmi une batterie restante et une sensibilité de délai de transmission d’une application en fonctionnement en ce moment.

**4.** Procédé selon la revendication 1, où l’information de configuration de l’équipement d’utilisateur comprend au moins l’une parmi de l’information de configuration de CQI, de l’information de configuration de SR, de l’information de configuration de SRS et de l’information de configuration de DRX.

**5.** Procédé selon la revendication 1, où la demande de modification d’état contient au moins l’une parmi une indication indiquant une nécessité de modification d’état et une indication indiquant l’état de fonctionnement préféré.

**6.** Procédé pour une station de base pour modifier les états de fonctionnement d’un équipement d’utilisateur, le procédé comprenant :

recevoir (525) de l’information d’état fixe indiquant de l’information de mobilité de l’équipement d’utilisateur depuis l’équipement d’utilisateur ;
transmettre (330, 535), à l’équipement d’utilisateur, un premier message de contrôle comprenant de l’information de configuration de DRX et de mesure de l’équipement d’utilisateur déterminée sur la base de l’information d’état fixe et une indication d’état indiquant un état de fonctionnement actuel de l’équipement d’utilisateur pour donner l’instruction à l’équipement d’utilisateur de transmettre une demande de modification d’état lorsqu’un état de fonctionnement préféré de l’équipement d’utilisateur n’est pas égal à l’état de fonctionnement actuel de l’équipement d’utilisateur ;
créer, lorsque la demande de modification d’état est reçue depuis l’équipement d’utilisateur, un deuxième message de contrôle pour la reconfiguration de connexion en réponse à la demande de modification d'état ; et transmettre (345) le deuxième message de contrôle à l'équipement d'utilisateur.

**7.** Procédé selon la revendication 6, où la demande de modification d'état contient au moins l'une parmi une indication indiquant une nécessité de modification d'état et une indication indiquant l'état de fonctionnement préféré de l'équipement d'utilisateur.

**8.** Procédé selon la revendication 6, où les états de fonctionnement comprennent un premier état d'économie de batterie, un premier état de délai de transmission et un état non spécifié.

**9.** Équipement d'utilisateur capable de modifier des états de fonctionnement, comprenant :

une unité d'émetteur-récepteur pour échanger des données avec une station de base ; et
une unité de contrôle configurée pour contrôler l'unité d'émetteur-récepteur pour transmettre de l'information d'état fixe indiquant de l'information de mobilité de l'équipement d'utilisateur à une station de base, contrôler l'unité d'émetteur-récepteur pour recevoir un message de contrôle comprenant une indication d'état et de l'information de configuration de DRX et de mesure de l'équipement d'utilisateur sur la base de l'information d'état fixe depuis la station de base, déterminer un état de fonctionnement préféré sur la base d'au moins un paramètre, déterminer un état de fonctionnement actuel sur la base d'au moins l'une parmi l'information de configuration de l'équipement d'utilisateur et l'indication d'état, et contrôler l'unité d'émetteur-récepteur pour transmettre, lorsque l'état de fonctionnement préféré n'est pas égal à l'état de fonctionnement actuel, une demande de modification d'état à la station de base.

**10.** Équipement d'utilisateur selon la revendication 9, où les états de fonctionnement comprennent un premier état d'économie de batterie, un premier état de délai de transmission et un état non spécifié.

**11.** Équipement d'utilisateur selon la revendication 9, où l'au moins un paramètre indique au moins l'une parmi la batterie restante et la sensibilité de délai de transmission d'une application en fonctionnement en ce moment.

**12.** Équipement d'utilisateur selon la revendication 9, où l'information de configuration comprend au moins l'une parmi de l'information de configuration de CQI, de l'information de configuration de SR, de l'information de configuration de SRS, et de l'information de configuration de DRX.

**13.** Équipement d'utilisateur selon la revendication 9, où la demande de modification d'état contient au moins l'une parmi une indication indiquant une nécessité de modification d'état et une indication indiquant l'état fonctionnement préféré.

**14.** Station de base capable de modifier des états de fonctionnement d'un équipement d'utilisateur, comprenant :

une unité d'émetteur-récepteur pour échanger des données avec l'équipement d'utilisateur ; et
une unité de contrôle configurée pour contrôler l'unité d'émetteur-récepteur pour recevoir de l'information d'état fixe indiquant de l'information de mobilité de l'équipement d'utilisateur depuis l'équipement d'utilisateur, contrôler l'unité d'émetteur-récepteur pour transmettre, à l'équipement d'utilisateur, un premier message de contrôle comprenant de l'information de configuration de DRX et de mesure de l'équipement d'utilisateur déterminée sur la base de l'information d'état fixe et une indication d'état indiquant un état de fonctionnement actuel de l'équipement d'utilisateur pour donner l'instruction à l'équipement d'utilisateur de transmettre une demande de modification d'état lorsqu'un état de fonctionnement préféré de l'équipement d'utilisateur n'est pas égal à l'état de fonctionnement actuel de l'équipement d'utilisateur, créer, lorsque la demande de modification d'état est reçue à travers l'unité d'émetteur-récepteur depuis l'équipement d'utilisateur, un message de contrôle pour la reconfiguration de connexion en réponse à la demande de modification d'état, et contrôler l'unité d'émetteur-récepteur pour transmettre le message de contrôle à l'équipement d'utilisateur.

**15.** Station de base selon la revendication 14, où la demande de modification d'état contient au moins l'une parmi une indication indiquant une nécessité de modification d'état et une indication indiquant l'état de fonctionnement préféré de l'équipement d'utilisateur.

**16.** Station de base selon la revendication 14, où les états de fonctionnement comprennent un premier état d'économie de batterie, un premier état de délai de transmission et un état non spécifié.

FIG. 1

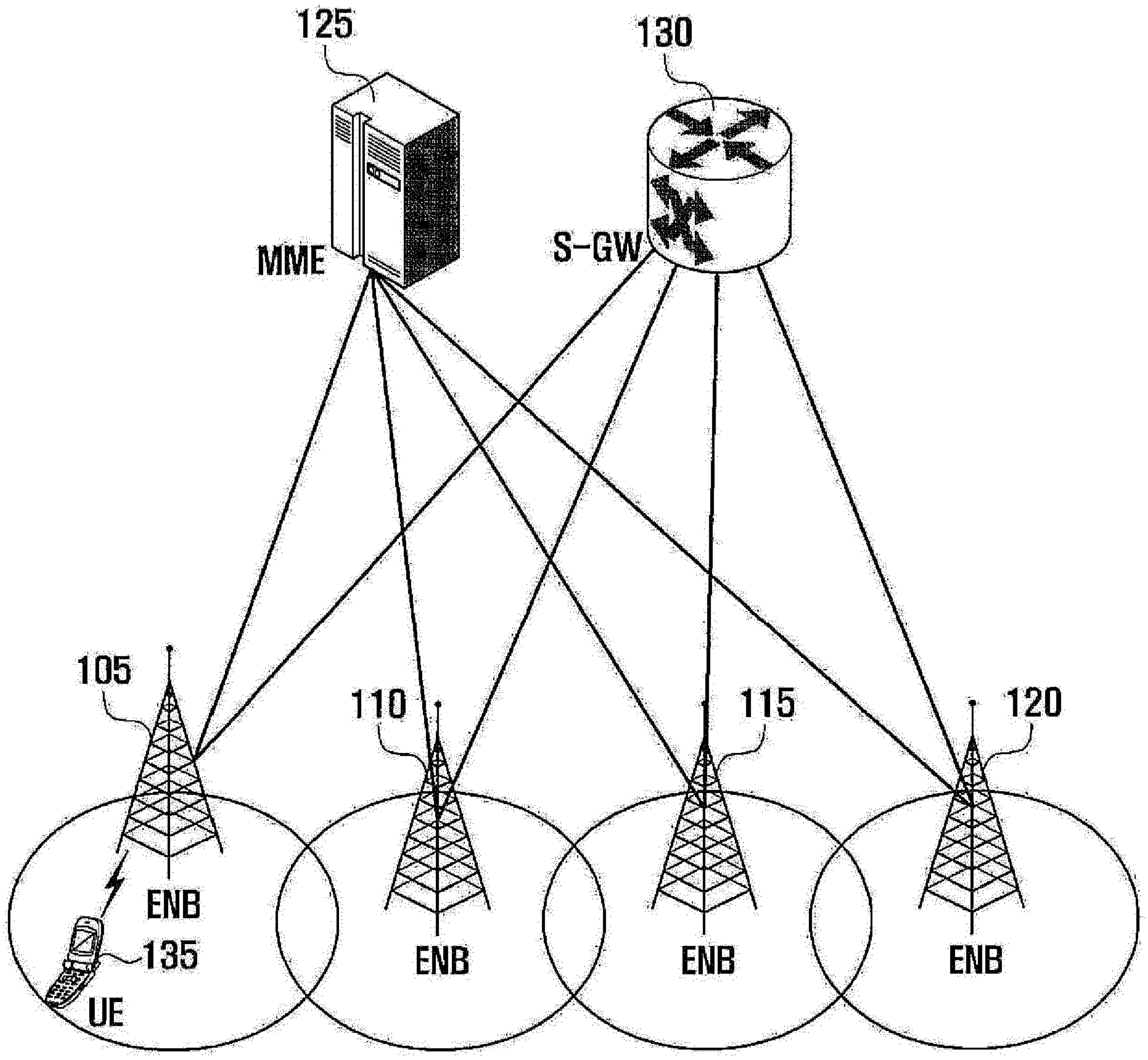

FIG. 2

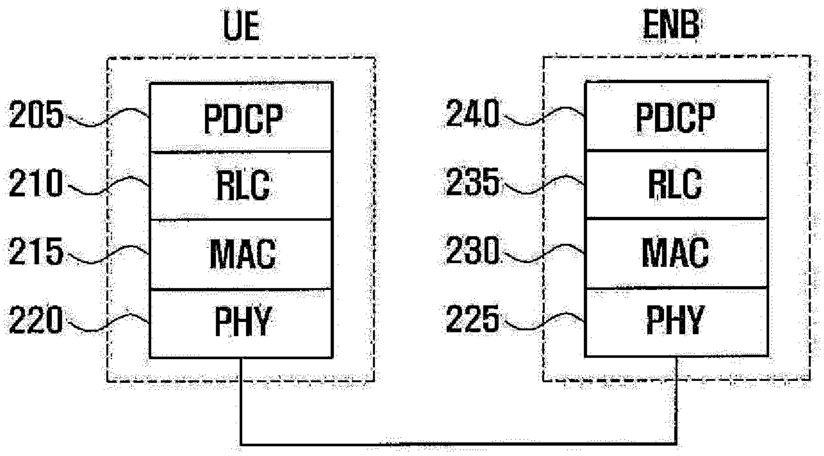
UE
ENB
205
PDCP
210
RLC
215
MAC
220
PHY
240
PDCP
235
RLC
230
MAC
225
PHY

FIG. 3

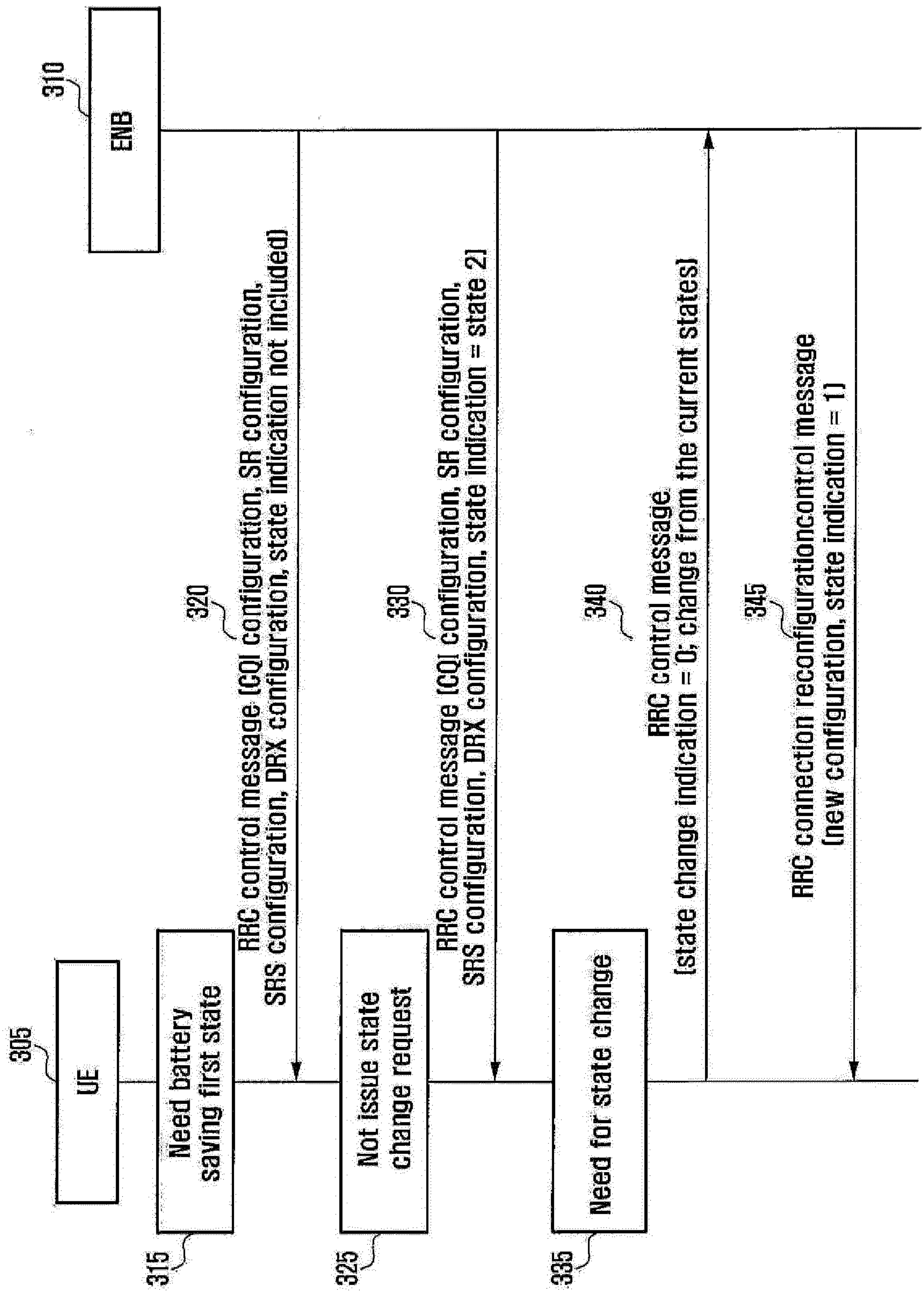
305
UE
310
ENB
315
Need battery saving first state
320
RRC control message [CQI configuration, SR configuration, SRS configuration, DRX configuration, state indication not included]
325
Not issue state change request
330
RRC control message [CQI configuration, SR configuration, SRS configuration, DRX configuration, state indication = state 2]
335
Need for state change
340
RRC control message [state change indication = 0; change from the current states]
345
RRC connection reconfigurationcontrol message [new configuration, state indication = 1]

FIG. 4

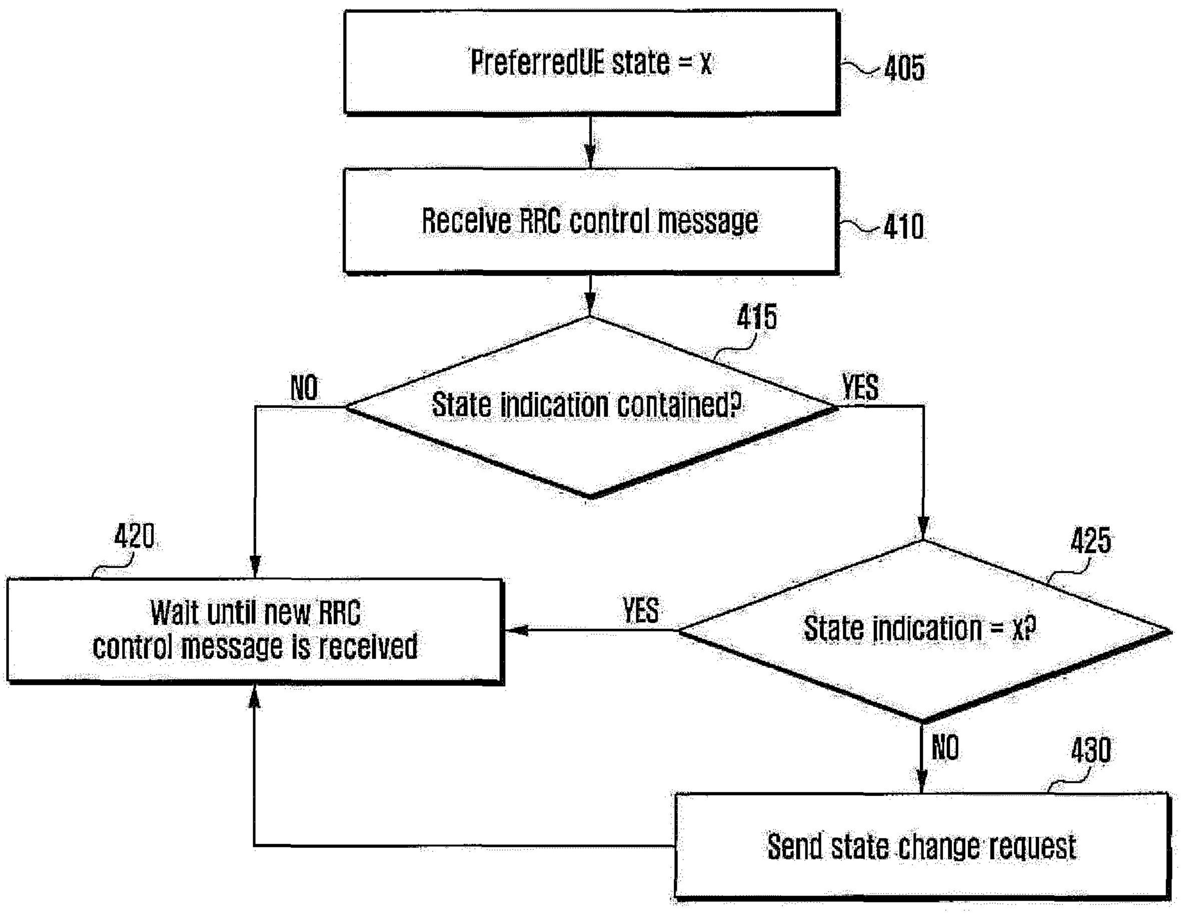
PreferredUE state = x
405
Receive RRC control message
410
415
State indication contained?
NO
YES
420
Wait until new RRC control message is received
425
YES
State indication = x?
NO
430
Send state change request

FIG. 5

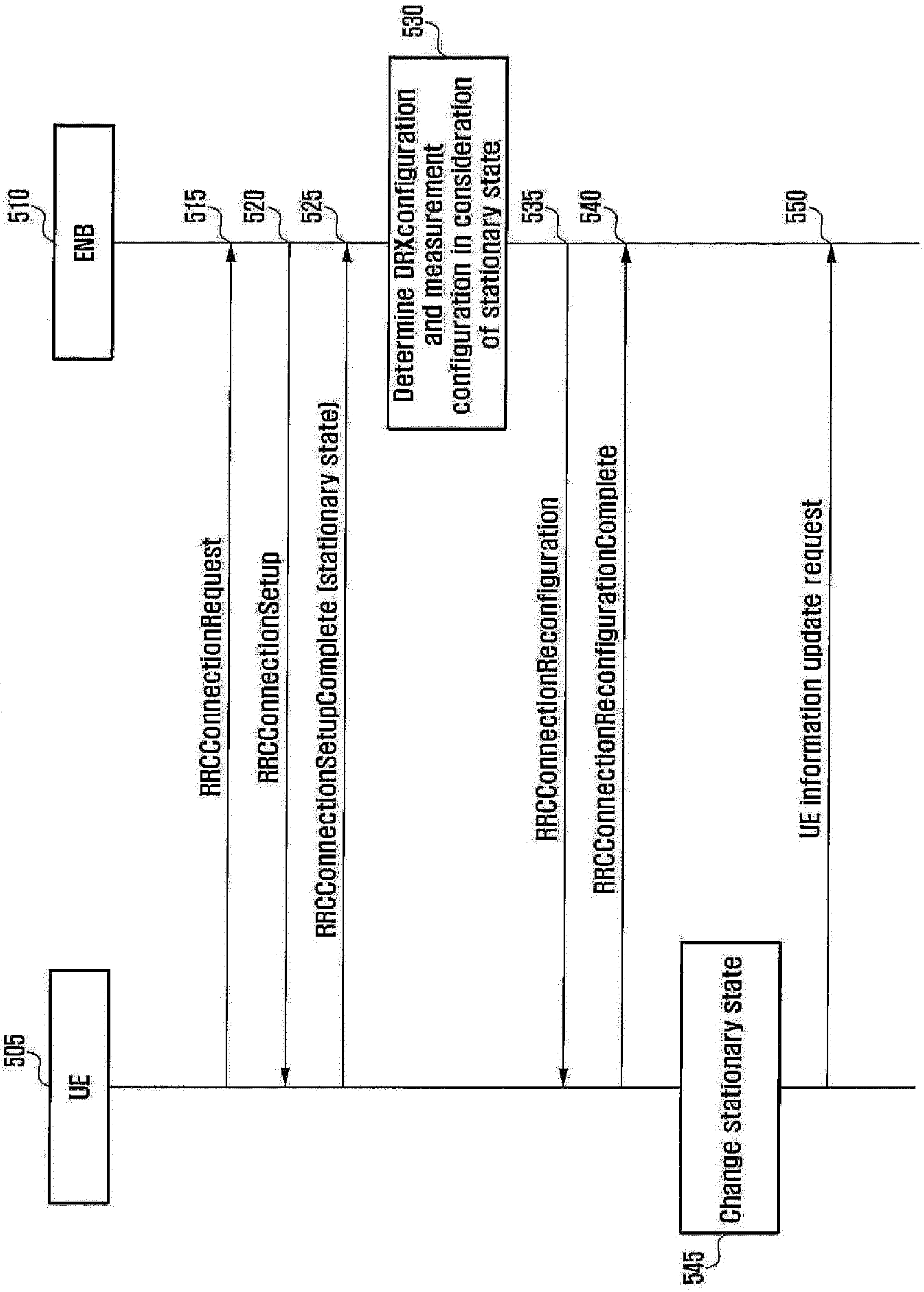
505
UE
510
ENB
515
RRCConnectionRequest
520
RRCConnectionSetup
525
RRCConnectionSetupComplete (stationary state)
530
Determine DRXconfiguration and measurement configuration in consideration of stationary state
535
RRCConnectionReconfiguration
540
RRCConnectionReconfigurationComplete
545
Change stationary state
550
UE information update request

FIG. 6

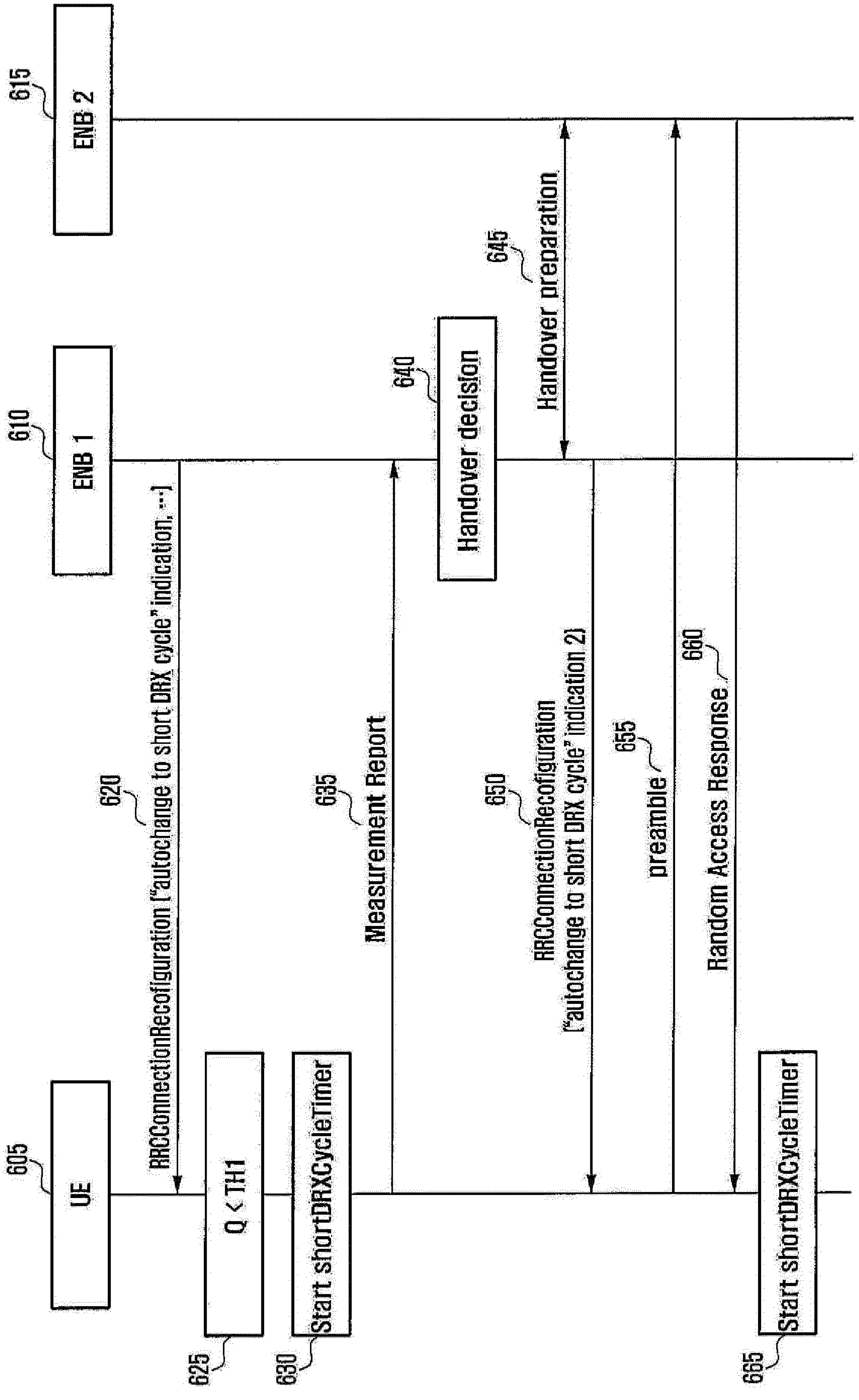
605
UE
610
ENB 1
615
ENB 2
620
RRCConnectionRecofiguration ("autochange to short DRX cycle" indication, ···)
625
Q < TH1
630
Start shortDRXCycleTimer
635
Measurement Report
640
Handover decision
645
Handover preparation
650
RRCConnectionRecofiguration
("autochange to short DRX cycle" indication 2)
655
preamble
660
Random Access Response
665
Start shortDRXCycleTimer

FIG. 7

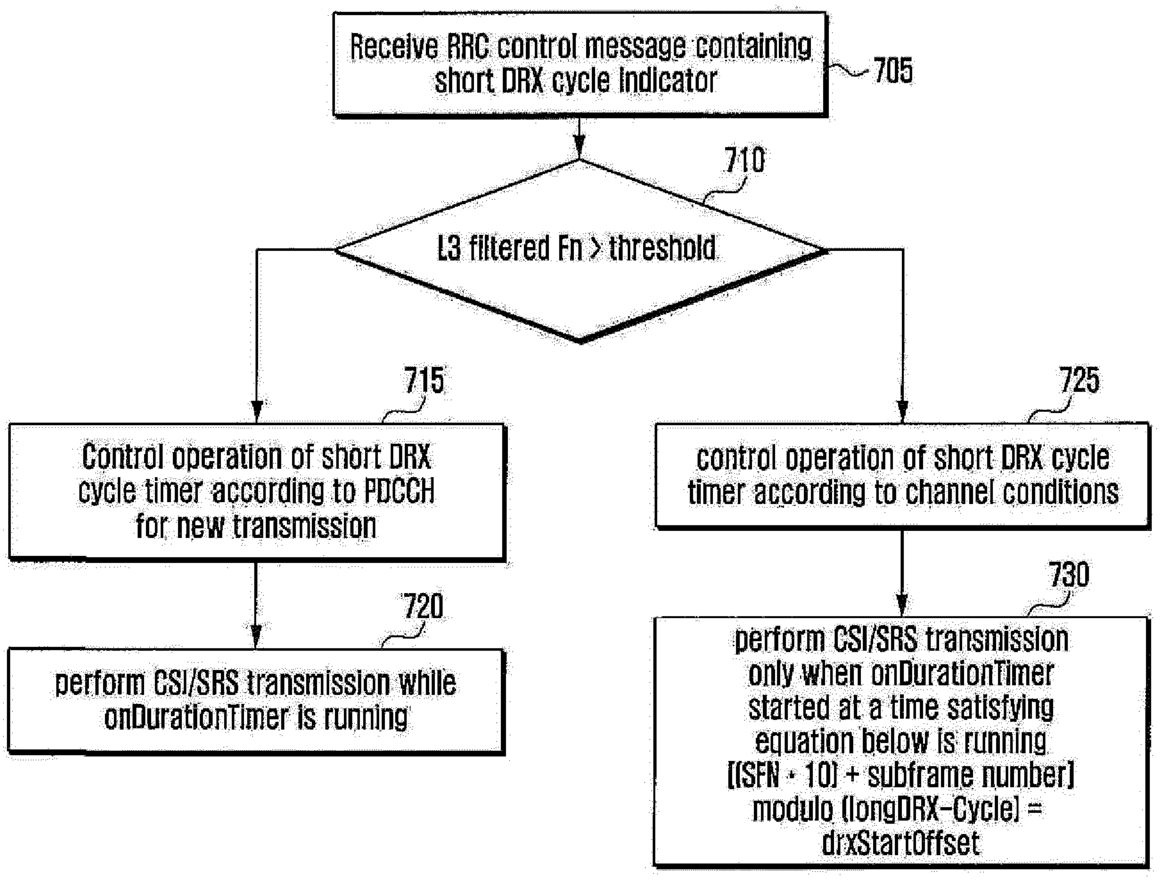
Receive RRC control message containing short DRX cycle indicator
705
L3 filtered Fn > threshold
710
Control operation of short DRX cycle timer according to PDCCH for new transmission
715
perform CSI/SRS transmission while onDurationTimer is running
720
control operation of short DRX cycle timer according to channel conditions
725
perform CSI/SRS transmission only when onDurationTimer started at a time satisfying equation below is running [(SFN * 10) + subframe number] modulo (longDRX-Cycle) = drxStartOffset
730

FIG. 8

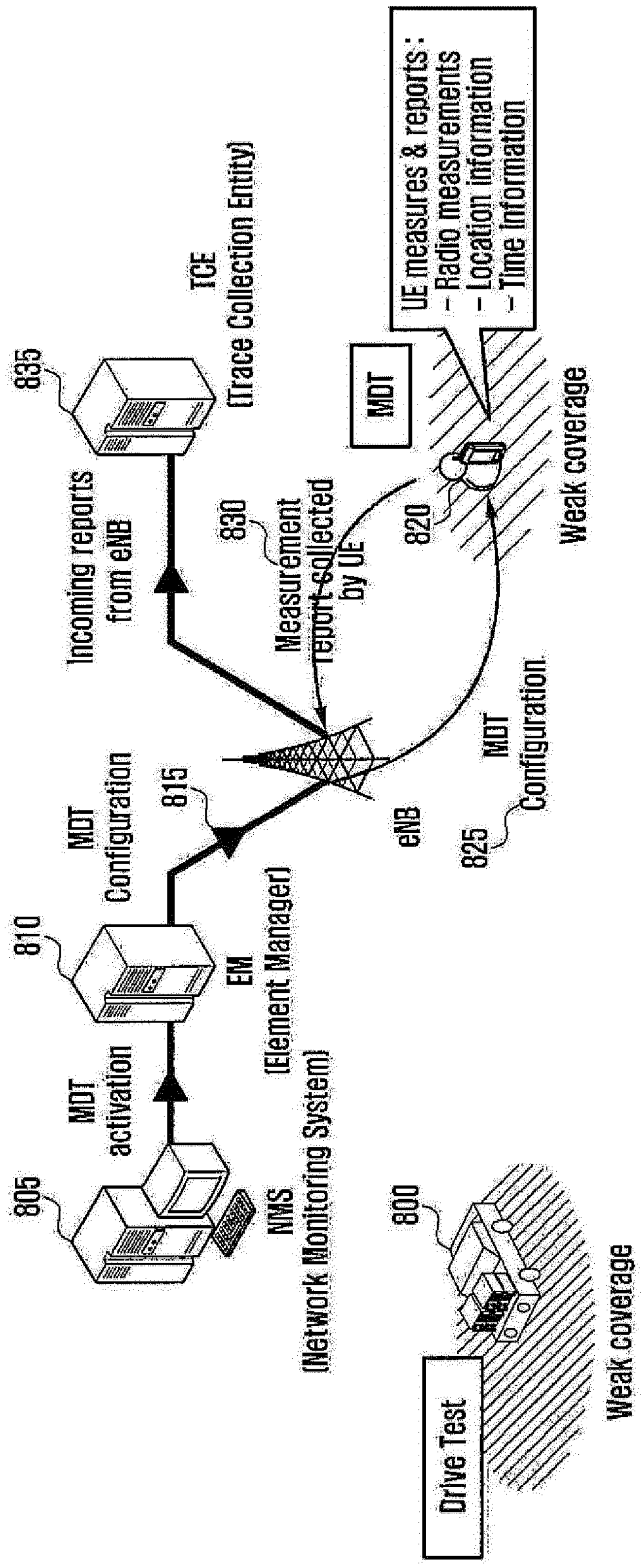
805
NMS
(Network Monitoring System)
MDT
activation
810
EM
(Element Manager)
MDT
Configuration
815
eNB
825
MDT
Configuration
Incoming reports
from eNB
830
Measurement
report collected
by UE
835
TCE
(Trace Collection Entity)
820
MDT
UE measures & reports :
- Radio measurements
- Location information
- Time Information
Weak coverage
800
Drive Test
Weak coverage

FIG. 9

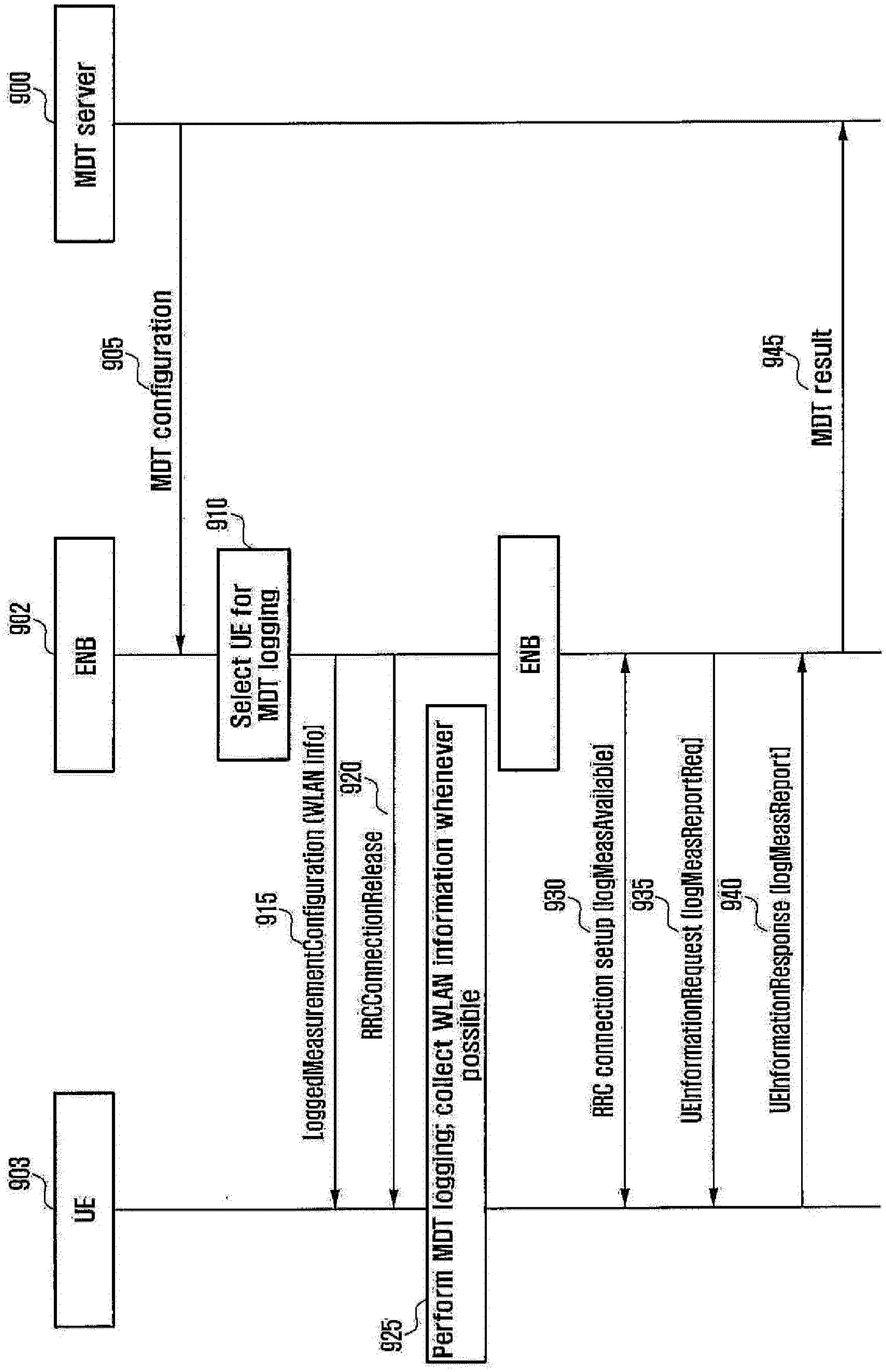
900
MDT server
902
ENB
903
UE
905
MDT configuration
910
Select UE for MDT logging
915
LoggedMeasurementConfiguration (WLAN info)
920
RRCConnectionRelease
925
Perform MDT logging; collect WLAN information whenever possible
ENB
930
RRC connection setup (logMeasAvailable)
935
UEInformationRequest (logMeasReportReq)
940
UEInformationResponse (logMeasReport)
945
MDT result

FIG. 10

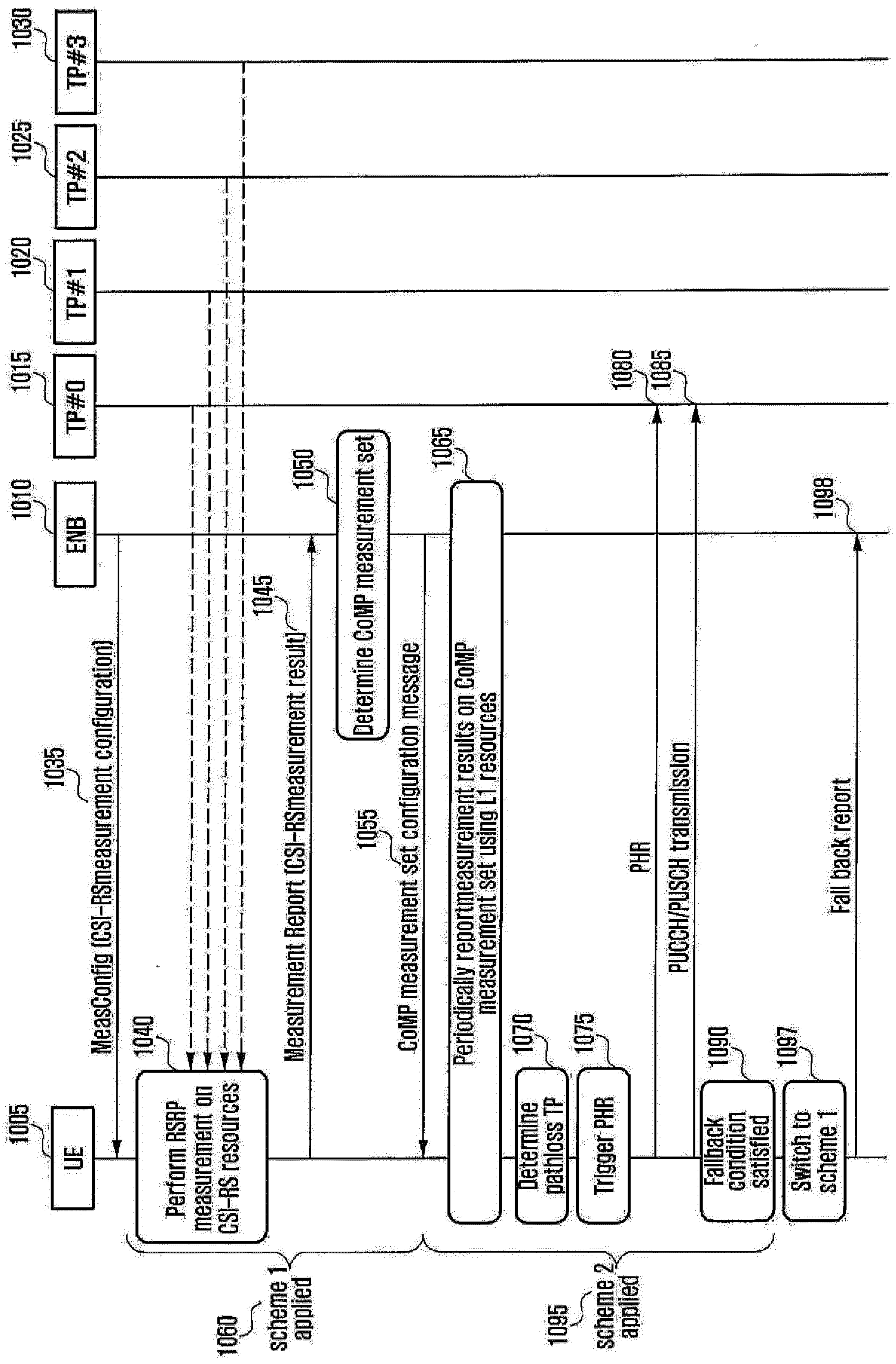
UE
1005
ENB
1010
TP#0
1015
TP#1
1020
TP#2
1025
TP#3
1030
MeasConfig (CSI-RSmeasurement configuration)
1035
Perform RSRP measurement on CSI-RS resources
1040
Measurement Report (CSI-RSmeasurement result)
1045
Determine CoMP measurement set
1050
CoMP measurement set configuration message
1055
scheme 1 applied
1060
Periodically reportmeasurement results on CoMP measurement set using L1 resources
1065
Determine pathloss TP
1070
Trigger PHR
1075
PHR
1080
PUCCH/PUSCH transmission
1085
Fallback condition satisfied
1090
scheme 2 applied
1095
Switch to scheme 1
1097
Fall back report
1098

FIG. 11

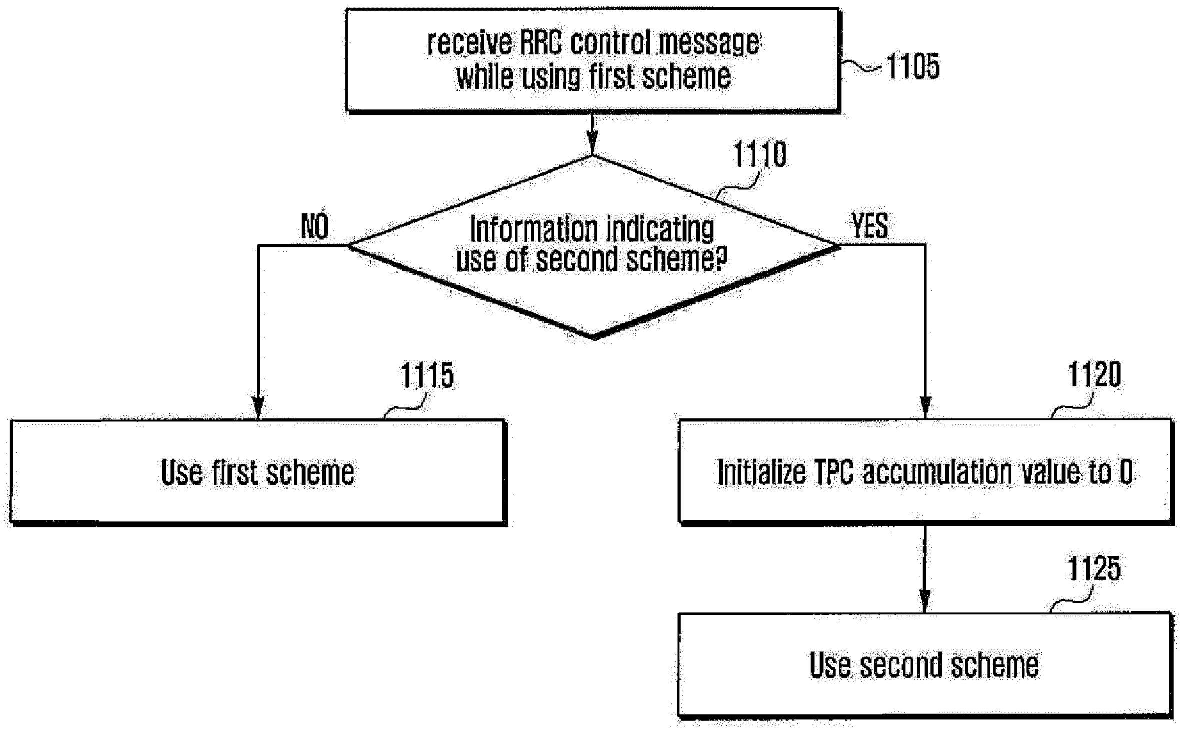
receive RRC control message
while using first scheme
1105
1110
Information indicating
use of second scheme?
NO
YES
1115
Use first scheme
1120
Initialize TPC accumulation value to 0
1125
Use second scheme

FIG. 12

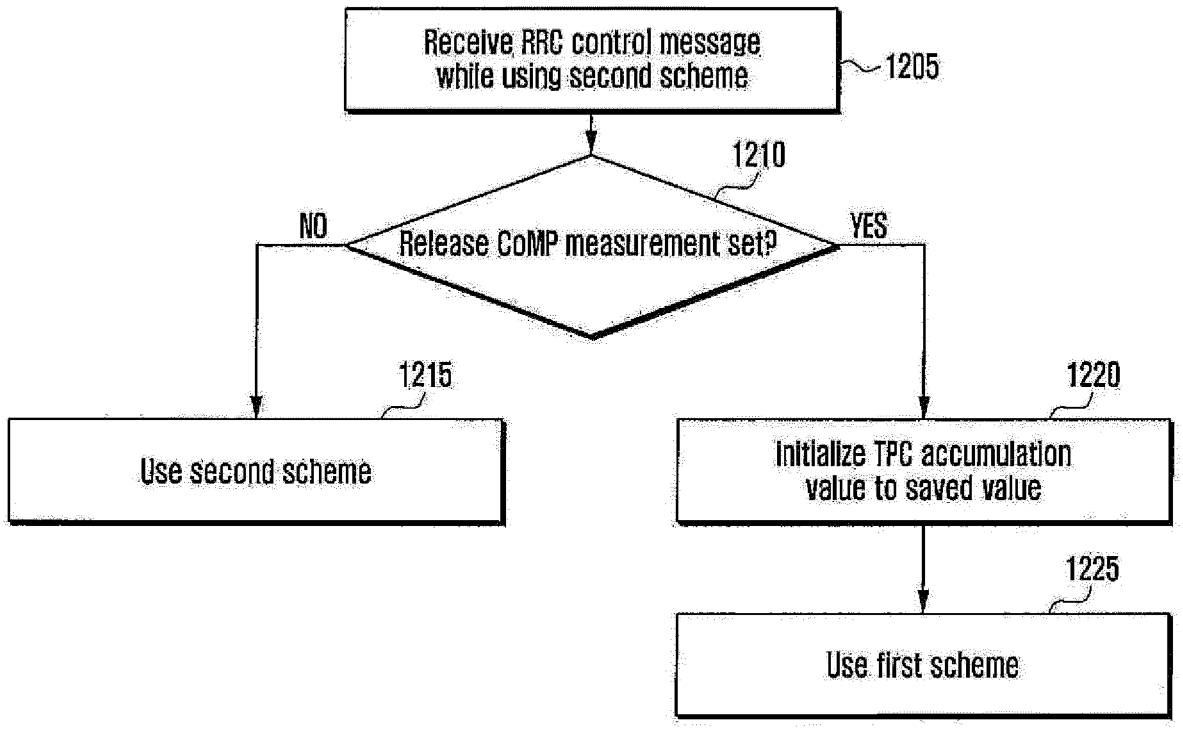
Receive RRC control message while using second scheme
1205
1210
NO
Release CoMP measurement set?
YES
1215
Use second scheme
1220
Initialize TPC accumulation value to saved value
1225
Use first scheme

FIG. 13

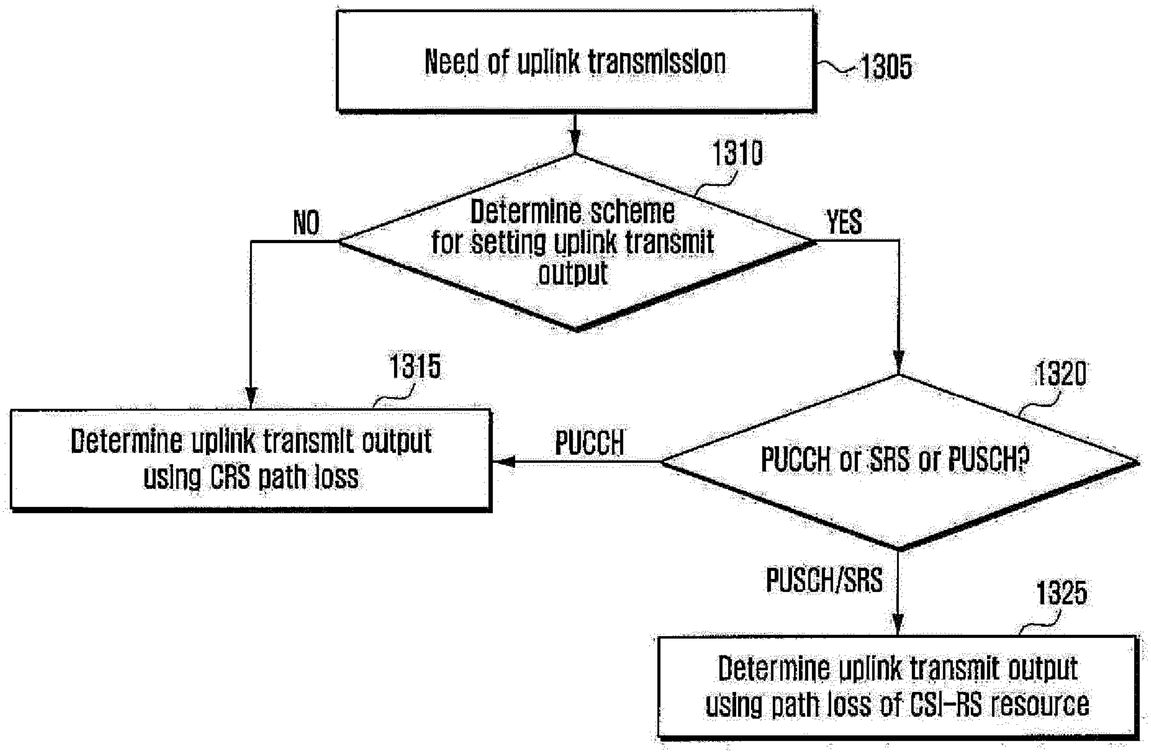
Need of uplink transmission
1305
1310
Determine scheme for setting uplink transmit output
NO
YES
1315
Determine uplink transmit output using CRS path loss
PUCCH
1320
PUCCH or SRS or PUSCH?
PUSCH/SRS
1325
Determine uplink transmit output using path loss of CSI-RS resource

FIG. 14

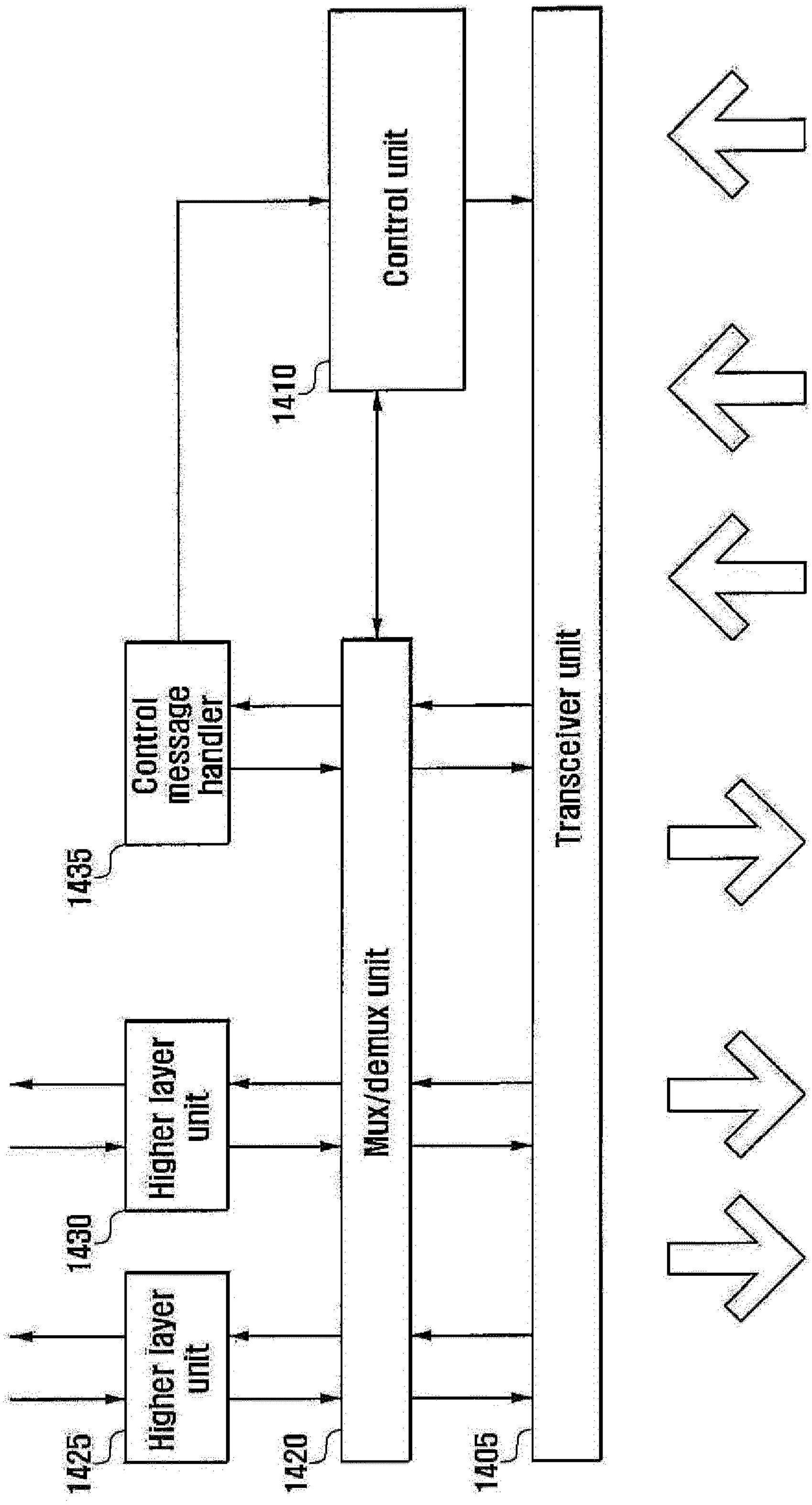
Control unit
1410
Control message handler
1435
Higher layer unit
1430
Higher layer unit
1425
Mux/demux unit
1420
Transceiver unit
1405

FIG. 15

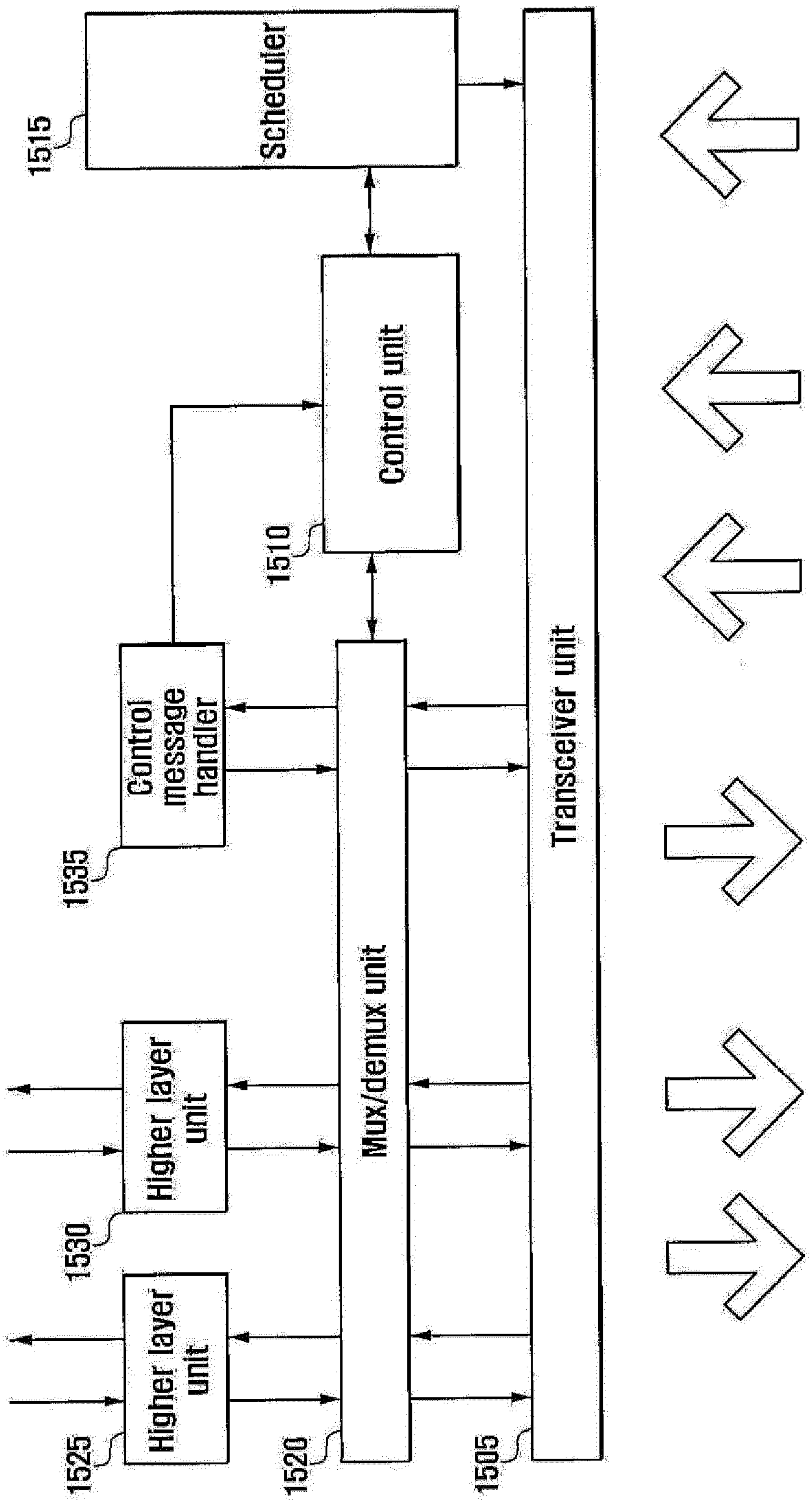
1515
Scheduler
Control unit
1510
Control message handler
1535
Higher layer unit
1530
Higher layer unit
1525
Mux/demux unit
1520
Transceiver unit
1505

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **INTEL.** Support for UE Assistance Information for eDDA. *3GPP standard contribution R2-121746*